# EUROPEAN PATENT APPLICATION

(11) **EP 3 064 062 A1**
(43) Date of publication of application: **07.09.2016**
(21) Application number: 15000631.0
(22) Date of filing: 05.03.2015
(51) Int. Cl.: A01N 25/02, A01N 25/30

(54) **Use of a composition for reducing the drift when applying a plant treatment composition**

(71) Applicant: CLARIANT INTERNATIONAL LTD, 4132 Muttenz (CH)
(72) Inventor: BAUR, Peter, 86938 Schondorf (DE); MANSOUR, Peter, 65185 Wiesbaden (DE); BAUER, Martin, 60329 Frakfurt am Main (DE); STAIGER, Siegfried, 65929 Frankfurt am Main (DE); CANAYAKIN, Secil, 34912 Istanbul (TR)
(74) Representative: Paczkowski, Marcus

(57) **Abstract**

The invention relates to the use of a composition comprising
a) one or more alkyl benzene sulfonate surfactants according to formula (I) 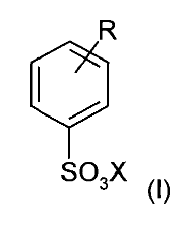 wherein
R
is a linear or branched C₈-C₁₈ alkyl group, and preferably a linear or branched C₁₂ alkyl group, and X
is a suitable counter-cation,
b) one or more aromatic solvents, and
c) optionally one or more non-ionic surfactants,
for reducing the spray drift when applying a plant treatment composition.

## Description

The invention relates to the use of selected compositions of matter as drift-reducing components in plant treatment compositions, to a method for reducing drift in the application of plant treatment compositions, and to compositions for drift reduction.

Crop protection compositions are applied to agricultural production fields in a very efficient manner using spray tanks carried by aircraft (aerial application), tractors (ground application) or other equipment. In order to achieve very exact deposition of the active substances at the target site, it is necessary to obtain a very narrow spray cone and to prevent drift of the spray away from the target site.

The off-target drift of the spray is determined essentially by its droplet size distribution. The smaller the droplets, the longer the residence time in the air and the greater their tendency to drift horizontally and to evaporate and/or to miss the target site. The literature discloses that the fine droplet fraction of < 150 µm (Teske et al., 2004, The Role of Small Droplets in Classifying Drop Size Distributions, ILASS Americas 17th Annual Conference, Arlington VA), especially < 100 µm (Vermeer et al., Proc. ISAA 2013, The use of adjuvanted formulations for drift control) determines the proportion of droplets in the spray that contributes to the drift effect. The reduction of the fine droplet content in the spray is therefore crucial to reduction of drift and is therefore utilized for determination of the drift properties of a composition.

Significant reduction of the drift effect can be achieved by addition of suitable "drift control agents" to crop protection formulations. These bring about a decrease in the fine droplet content and hence an increase in droplet size in the spray. The formulations modified with "drift control agents" additionally have to be insensitive to the shear forces to which they are exposed in the spray pumps and nozzles. Good biodegradability, compatibility with other constituents of the crop protection compositions and high storage stability and thermal stability are further requirements for "drift control agents". It is known that the rheology of aqueous compositions can be modified by addition of water-soluble polymers, for example polyacrylamides, acrylamide/acrylic acid polymers, sodium polyacrylate, carboxymethyl cellulose, hydroxyethyl cellulose, methyl cellulose, polysaccharides, natural and synthetic guar gum (US 4,413,087, US 4,505,827, US 5,874,096), these leading to a shift in the droplet size spectrum towards larger droplets.

Molasses and organic thickeners have also been described as effective drift reduction agents (Pesticide Drift III; Drift Reduction with Spray Thickeners; Ware, G.W. et al.; J. of Economic Entomology 63; 1314-1316; 1970). It is additionally known that particular emulsions - via a mechanism which is not fully understood - lead to a reduced fine droplet content (Vermeer et al.; Crop Protection 44; 2013; Spray drift review: The extent to which a formulation can contribute to spray drift reduction). The effect has been mainly described for emulsions based on vegetable oil, mineral oil, organosilicones and water insoluble surfactants (see Thesis from Emilia Hilz, Atomization of dilute oil-in-water emulsions during application of crop protection products, p. 23, Wageningen University, 2013).

Even though good results are already achieved with the known systems, there is still a need, for technical, economic and ecological reasons, to find suitable "drift control agents" which, even under practical conditions, effectively increase the droplet volumes of the aqueous compositions and reduce spray drift. Especially antagonisms with crop treatment formulations, fertilizers and surface-active tankmix additives limit the effect of the "drift control agents", and more robust products are needed.

US 2014/0106972 A1 discloses alkylbenzene sulfonate surfactants for controlling herbicide spray drift. These surfactants are added to water-based herbicidal compositions comprising water-soluble herbicides which are applied via spraying to the crops. In this reference it is shown that addition of these surfactants to the aqueous herbicidal compositions results in a remarkable drift reduction during spray application of the herbicidal composition. The water-based herbicidal compositions contain no organic solvent or minor amounts of propylene glycol an aliphatic alcohol. It has now been found that, surprisingly, the addition of a combination of alkylbenzene sulfonate surfactants with selected solvents to agrochemical compositions results in compositions with still more improved drift-reducing activity. Therefore, when these plant treatment compositions are sprayed an effective increase in droplet size through a reduction in the fine droplet content in the spray is observed. It has thus been found that, surprisingly, these particular agrochemical compositions comprising the ingredients of the present invention are suitable for improved reduction of spray drift in the application of plant treatment compositions. Furthermore, the compositions of this invention can be used for preparing formulations comprising non-water soluble agrochemical substances.

The invention therefore provides for the use of a composition comprising
a) one or more alkyl benzene sulfonate surfactants according to formula (I) 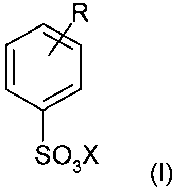 wherein
   - R: is a linear or branched C₈-C₁₈ alkyl group, and preferably a linear or branched C₁₂ alkyl group, and
   - X: is a suitable counter-cation, preferably alkyl ammonium, which is preferably selected from the group consisting of isopropyl ammonium, dimethyl ammonium, triethyl ammonium, tetramethyl ammonium, monoethanol ammonium, diethanol ammonium, triethanol ammonium, dimethylethanol ammonium, diethylenglycol ammonium, triisopropanol ammonium, tetraethyl ammonium, choline, calcium, magnesium, potassium or sodium and more preferably calcium,
b) one or more aromatic solvents, wherein the one or more aromatic solvent are preferably aromatic hydrocarbons which are unsubstituted or which carry one or more substitutents, preferably one or more alkyl groups and/or hydroxyl groups, and
c) optionally one or more non-ionic surfactants,
for reducing the spray drift when applying a plant treatment composition.

The one or more alkyl benzene sulfonate surfactants a) can include a mixture of linear and/or branched R groups with an array of different lengths (e. g. C₈-C₁₈) attached to the alkylbenzene sulfonate surfactant molecules at different positions along the aromatic group. Similarly, an alkyl benzene sulfonate surfactant can include a mixture of molecules with a uniform length R group (e.g. C₁₂) attached to alkylbenzene sulfonate surfactant molecules at different positions along the aromatic group. Commercial examples for such products are the iso-alkyl benzene sulfonate calcium salt (Phenylsulfonate® CA from Clariant), and the linear alkyl benzene sulfonate calcium salt (Phenylsulfonate^{®} CAL from Clariant).

The R group in the alkyl benzene sulfonate of formula I can be in ortho-, meta-, or para-position of the aromatic nucleus.

The one or more aromatic solvents b) are preferably selected from the group of aromatic hydrocarbons which are unsubstituted or which carry one or more substitutents.

Aromatic hydrocarbons are hydrocarbons with alternating double and single bonds between carbon atoms forming rings. Aromatic hydrocarbons can be monocyclic or polycyclic.

The rings or ring systems forming aromatic hydrocarbons can consist of carbon atoms and hydrogen atoms only or the aromatic ring systems can contain one or more heteroatoms, such as oxygen, sulfur or nitrogen ring atoms. Preferred aromatic solvents b) are carbocyclic aromatic hydrocarbons.

Aromatic hydrocarbons can contain one or more aromatic nuclei which can be connected via covalent C-C-bonds or via bridge groups by one another. Several aromatic rings can also form a condensed system or can be combined with other non-aromatic hydrocarbon rings. Examples of bridge groups are oxygen, nitrogen or alkylene bridge groups.

Examples of preferred aromatic hydrocarbons are unsubstituted or substituted benzene or unsubstituted or substituted naphthalene.

Examples of substituents are alkyl groups, alkoxy groups, hydroxyl groups, halogen atoms and carboxylic ester groups.

Very preferred aromatic solvents b) are unsubstituted benzene or benzene or naphthalene which are substituted with one or two C₁-C₄ alkyl groups and/or with one or two C₁-C₄ alkoxy groups and/or with one or two hydroxyl groups and/or with one or two chlorine atoms.

Examples of very preferred aromatic solvents b) are xylene, toluene, alkylnaphthalenes, naphthalene depleted alkarenes, chlorinated aromatic hydrocarbons, cymene or carvacrol. These latter two aromatic hydrocarbons belong also to the group or terpenes or terpenoids.

The composition used according to the invention preferably contains ingredients a), b) and c).

The one or more non-ionic surfactants c) are preferably selected from the group of polycondensates of alkylene oxide with fatty alcohols, fatty acids or triglycerides of fatty acids (preferably alkoxylated fatty acids or alkoxylated triglycerides of fatty acids), fatty amines, substituted phenols (preferably alkylphenols or arylphenols), fatty acid esters of polyols, polymeric surfactants based on copolymers of ethylene and propylene, alkyl-polyglycosides, glucamides, alkoxylated sorbitanester derivates or mixtures of two or more thereof and more preferably selected from the group of polycondensates of ethylene oxide with castor oil.

Preferably the one or more non-ionic surfactants c) are selected from the group consisting of alkoxylated fatty acids, alkoxylated triglycerides of fatty acids, alkoxylated alkylphenols and/or alkoxylated arylphenols, most preferably selected from the group consisting of ethoxylated fatty acids, ethoxylated triglycerides of fatty acids, ethoxylated alkylphenols and/or ethoxylated arylphenols.

"Crop treatment compositions" or "plant treatment compositions" in the context of the invention are understood to mean compositions containing one or more agrochemical substances, preferably substances selected from the group consisting of pesticides, phytohormones, preferably growth regulators, biological control agents, salts that can be deployed in water, preferably fertilizers or plant nutrients, or fungicidal copper compounds, and repellents.

The one or more substances just mentioned, selected from the group consisting of pesticides, phytohormones, preferably growth regulators, biological control agents, salts that can be deployed in water, preferably fertilizers or plant nutrients, or fungicidal copper compounds, and repellents, are referred to in the context of the present invention as "agrochemical substances".

The agrochemical substances used in the compositions of this invention may be water-soluble or water-insoluble. A water-soluble compound in the context of this invention is understood that this compound has a solubility in water at 25 °C of more than 1 g/l. A water-insoluble compound in the context of this invention is understood that this compound has a solubility in water at 25 °C of less or equal of than 1 g/l.

"Drift" in the context of the invention is understood to mean the effect that the spraying of the crop treatment composition forms small droplets which are borne beyond the area to be treated, and can thus make the spraying less effective or even harmful to adjacent areas and crops.

In addition to the drift, relatively small droplets have a tendency to increased vaporization, which can lead to reduced availability of the active ingredient in the target area.

In the context of the present invention, "drift reduction" or "reducing drift" are preferably understood to mean the reduction of the proportion of fine droplets having a diameter of <105 µm in the spray mist compared to the application of a composition which does not contain the agrochemical composition, preferably by at least 10 % and more preferably by at least 25 %.

It is known that the presence of particular substances in aqueous spray liquids the fine droplet content in the spray mist is increased compared to aqueous spray liquids which do not contain these substances. If the composition used in accordance with the invention is added to these spray liquids producing an elevated fine droplet content, the relative reduction in drift may be even much higher than that specified above.

"Application" of a crop treatment composition in the form of a spray containing one or more agrochemical substances in the context of the invention is understood to mean the application of an aqueous spray containing one or more agrochemical substances to the plants to be treated or to the site thereof.

Preferably, a composition used in accordance with the invention contains
a) 0.01 % to 99 % by weight, preferably 1 % to 80 % by weight and more preferably 2 % to 50 % by weight of one or more alkyl benzene sulfonate surfactants according to formula (I),
b) 0.01 % to 99 % by weight, preferably 1 % to 95 % by weight and more preferably 5 % to 90 % by weight of one or more aromatic solvents, and
c) 0 % to 99 % by weight, preferably 1 % to 80 % by weight and more preferably 2 % to 50 % by weight of one or more non-ionic surfactants.

A preferred embodiment of the invention is the use of the composition for reducing drift in the application of crop treatment compositions as a tankmix additive, meaning that the composition for reducing drift is not added until directly prior to deployment of a spray liquid produced from a concentrated formulation.

The composition in accordance with the invention may be used in all standard formulation types, preferably in liquid formulations.

Another preferred embodiment of the invention is the use of the composition for reducing drift in the application of crop treatment compositions as an in-can variant, meaning that the composition for reducing drift is already incorporated into a concentrated formulation together with the ingredients of the crop treatment composition and is deployed as a spray liquid diluted with water.

The inventive use of the agrochemical composition in accordance with the invention is preferably effected in ready-to-use crop treatment compositions in the form of spray liquid, in which case the amount of the agrochemical composition in accordance with the invention in the spray liquid is preferably from 0.001 % to 5 % by weight, more preferably from 0.005 % to 3 % by weight, especially preferably from 0.01 % to 1 % by weight and exceptionally preferably from 0.03 % to 0.5 % by weight, based in each case on the total weight of the spray liquid. These spray liquids used according to the inventive preferably contain one or more agrochemical substances, more preferably one or more pesticides.

"Pesticides" are understood in the context of the present invention to mean herbicides, fungicides, insecticides, acaricides, bactericides, molluscicides, nematicides, rodenticides and safeners. An overview of the most relevant pesticides can be found, for example, in "The Pesticide Manual" from the British Crop Protection Council, 16th Edition 2012, editor: C. MacBean. Explicit reference is hereby made to the active ingredients listed therein. They are incorporated into this description by citation.

Examples of fungicides include:
(1) Ergosterol biosynthesis inhibitors, for example aldimorph, azaconazole, bitertanol, bromuconazole, cyproconazole, diclobutrazole, difenoconazole, diniconazole, diniconazole-M, dodemorph, dodemorph acetate, epoxiconazole, etaconazole, fenarimol, fenbuconazole, fenhexamid, fenpropidin, fenpropimorph, fluquinconazole, flurprimidol, flusilazole, flutriafol, furconazole, furconazole-cis, hexaconazole, imazalil, imazalil sulfate, imibenconazole, ipconazole, metconazole, myclobutanil, naftifin, nuarimol, oxpoconazole, paclobutrazole, pefurazoate, penconazole, piperalin, prochloraz, propiconazole, prothioconazole, pyributicarb, pyrifenox, quinconazole, simeconazole, spiroxamine, tebuconazole, terbinafine, tetraconazole, triadimefon, triadimenol, tridemorph, triflumizole, triforine, triticonazole, uniconazole, uniconazole-p, viniconazole, voriconazole, 1-(4-chlorophenyl)-2-(1 H-1,2,4-triazol-1-yl)cycloheptanol, methyl 1-(2,2-dimethyl-2,3-dihydro-1H-inden-1-yl)-1H-imidazole-5-carboxylate, N'-{5-(difluoromethyl)-2-methyl-4-[3-(trimethylsilyl)propoxy]phenyl}-N-ethyl-N-methylimidoformamide, N-ethyl-N-methyl-N'-{2-methyl-5-(trifluoromethyl)-4-[3-(trimethylsilyl)propoxy]phenyl}imidoformamide and O-[1-(4-methoxyphenoxy)-3,3-dimethylbutan-2-yl] 1H-imidazole-1-carbothioate.
(2) Respiration inhibitors (respiratory chain inhibitors), for example bixafen, boscalid, carboxin, diflumetorim, fenfuram, fluopyram, flutolanil, fluxapyroxad, furametpyr, furmecyclox, isopyrazam mixture of the syn-epimeric racemate 1 RS,4SR,9RS and of the anti-epimeric racemate 1 RS,4SR,9SR, isopyrazam (anti-epimeric racemate), isopyrazam (anti-epimeric enantiomer 1 R,4S,9S), isopyrazam (anti-epimeric enantiomer 1S,4R,9R), isopyrazam (syn-epimeric racemate 1 RS,4SR,9RS), isopyrazam (syn-epimeric enantiomer 1 R,4S,9R), isopyrazam (syn-epimeric enantiomer 1S,4R,9S), mepronil, oxycarboxin, penflufen, penthiopyrad, sedaxane, thifluzamid, 1-methyl-N-[2-(1,1,2,2-tetrafluoroethoxy)phenyl]-3-(trifluororriethyl)-1H-pyrazole-4-carboxamide, 3-(difluoromethyl)-1-methyl-N-[2-(1,1,2,2-tetrafluoroethoxy)phenyl]-1H-pyrazole-4-carboxamide, 3-(difluoromethyl)-N-[4-fluoro-2-(1,1,2,3,3,3-hexafluoropropoxy)phenyl]-1-methyl-1 H-pyrazole-4-carboxamide, N-[1-(2,4-dichlorophenyl)-1-methoxypropan-2-yl]-3-(difluoromethyl)-1-methyl-1H-pyrazole-4-carboxamide, 5,8-difluoro-N-[2-(2-fluoro-4-{[4-(trifluoromethyl)pyridin-2-yl]oxy}phenyl)ethyl]quinazoline-4-amine, N-[9-(dichloromethylene)-1,2,3,4-tetrahydro-1,4-methanonaphthalen-5-yl]-3-(difluoromethyl)-1-methyl-1H-pyrazole-4-carboxamide, N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide and N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide.
(3) Respiration inhibitors (respiratory chain inhibitors) acting on complex III of the respiratory chain, for example ametoctradin, amisulbrom, azoxystrobin, cyazofamid, coumethoxystrobin, coumoxystrobin, dimoxystrobin, enestroburin, famoxadone, fenamidone, fenoxystrobin, fluoxastrobin, kresoxim-methyl, metominostrobin, orysastrobin, picoxystrobin, pyraclostrobin, pyrametostrobin, pyraoxystrobin, pyribencarb, triclopyricarb, trifloxystrobin, (2E)-2-(2-{[6-(3-chloro-2-methylphenoxy)-5-fluoropyrimidin-4-yl]oxy}phenyl)-2-(methoxyimino)-N-methylethanamide, (2E)-2-(methoxyimino)-N-methyl-2-(2-{[({(1E)-1-[3-(trifluoromethyl)phenyl]ethylidene}amino)-oxy]methyl}phenyl)ethanamide, (2E)-2-(methoxyimino)-N-methyl-2-{2-[(E)-({1-[3-(trifluoromethyl)phenyl]ethoxy}imino)methyl]phenyl}ethanamide, (2E)-2-{2-[({[(1E)-1-(3-{[(E)-1-fluoro-2-phenylethenyl]oxy}phenyl)ethylidene]amino}oxy)methyl]phenyl}-2-(methoxyimino)-N-methylethanamide, (2E)-2-{2-[({[(2E,3E)-4-(2,6-dichlorophenyl)but-3-en-2-ylidene]amino}oxy)methyl]phenyl}-2-(methoxyimino)-N-methylethanamide, 2-chloro-N-(1,1 ,3-trimethyl-2,3-dihydro-1 H-inden-4-yl)pyridine-3-carboxamide, 5-methoxy-2-methyl-4-(2-{[({(1E)-1-[3-(trifluoromethyl)phenyl]ethylidene}amino)oxy]methyl}phenyl)-2,4-dihydro-3H-1,2,4-triazol-3-one, methyl (2E)-2-{2-[({cyclopropyl[(4-methoxyphenyl)-imino]methyl}sulfanyl)methyl]phenyl}-3-methoxyprop-2-enoate, N-(3-ethyl-3,5,5-trimethylcyclohexyl)-3-(formylamino)-2-hydroxybenzamide, 2-{2-[(2,5-dimethylpheno.xy)methyl]phenyl}-2-methoxy-N-methylacetamide and (2R)-2-{2-[(2,5-dimethylphenoxy)methyl]phenyl}-2-methoxy-N-methylacetamide.
(4) Mitosis and cell division inhibitors, for example benomyl, carbendazim, chlorfenazole, diethofencarb, ethaboxam, fluopicolide, fuberidazole, pencycuron, thiabendazole, thiophanate-methyl, thiophanate, zoxamide, 5-chloro-7-(4-methylpiperidin-1-yl)-6-(2,4,6-trifluorophenyl)[1,2,4]triazolo[1,5-a]pyrimidine and 3-chloro-5-(6-chloropyridin-3-yl)-6-methyl-4-(2,4,6-trifluorophenyl)pyridazine.
(5) Compounds with multisite activity, for example Bordeaux mixture, captafol, captan, chlorothalonil, copper preparations such as copper hydroxide, copper naphthenate, copper oxide, copper oxychloride, copper sulfate, dichlofluanid, dithianon, dodine, dodine free base, ferbam, fluorofolpet, folpet, guazatine, guazatine acetate, iminoctadine, iminoctadine albesilate, iminoctadine triacetate, mancopper, mancozeb, maneb, metiram, metiram zinc, oxine-copper, propamidine, propineb, sulfur and sulfur preparations, for example calcium polysulfide, thiram, tolylfluanid, zineb and ziram.
(6) Resistance inductors, for example acibenzolar-S-methyl, isotianil, probenazole and tiadinil.
(7) Amino acid and protein biosynthesis inhibitors, for example andoprim, blasticidin-S, cyprodinil, kasugamycin, kasugamycin hydrochloride hydrate, mepanipyrim, pyrimethanil and 3-(5-fluoro-3,3,4,4-tetramethyl-3,4-dihydroisoquinolin-1-yl)quinoline.
(8) Inhibitors of ATP production, for example, fentin acetate, fentin chloride, fentin hydroxide and silthiofam.
(9) Cell wall synthesis inhibitors, for example benthiavalicarb, dimethomorph, flumorph, iprovalicarb, mandipropamid, polyoxins, polyoxorim, validamycin A and valifenalate.
(10) Lipid and membrane synthesis inhibitors, for example biphenyl, chloroneb, dicloran, edifenphos, etridiazole, iodocarb, iprobenfos, isoprothiolane, propamocarb, propamocarb hydrochloride, prothiocarb, pyrazophos, quintozene, tecnazene and tolclofos-methyl.
(11) Melanin biosynthesis inhibitors, for example carpropamid, diclocymet, fenoxanil, fthalide, pyroquilon, tricyclazole and 2,2,2-trifluoroethyl {3-methyl-1-[(4-methylbenzoyl)amino]butan-2-yl}carbamate.
(12) Nucleic acid synthesis inhibitors, for example benalaxyl, benalaxyl-M (kiralaxyl), bupirimate, clozylacon, dimethirimol, ethirimol, furalaxyl, hymexazol, metalaxyl, metalaxyl-M (mefenoxam), ofurace, oxadixyl and oxolinic acid.
(13) Signal transduction inhibitors, for example chlozolinate, fenpiclonil, fludioxonil, iprodione, procymidone, quinoxyfen and vinclozolin.
(14) Decouplers, for example binapacryl, dinocap, ferimzone, fluazinam and meptyldinocap.
(15) Further compounds, for example benthiazole, bethoxazin, capsimycin, carvone, chinomethionat, pyriofenone (chlazafenone), cufraneb, cyflufenamid, cymoxanil, cyprosulfamide, dazomet, debacarb, dichlorophen, diclomezine, difenzoquat, difenzoquat methylsulfate, diphenylamine, ecomat, fenpyrazamine, flumetover, fluoromide, flusulfamide, flutianil, fosetyl-aluminum, fosetyl-calcium, fosetyl-sodium, hexachlorobenzene, irumamycin, methasulfocarb, methyl isothiocyanate, metrafenon, mildiomycin, natamycin, nickel dimethyldithiocarbamate, nitrothal-isopropyl, octhilinone, oxamocarb, oxyfenthiin, pentachlorophenol and salts thereof, phenothrin, phosphoric acid and salts thereof, propamocarb-fosetylate, propanosine-sodium, proquinazid, pyrimorph, (2E)-3-(4-tert-butylphenyl)-3-(2-chloropyridin-4-yl)-1-(morpholin-4-yl)prop-2-en-1-one, (2Z)-3-(4-tert-butylphenyl)-3-(2-chforopyridin-4-yl)-1-(morpholin-4-yl)prop-2-en-1-one, pyrrolnitrin, tebufloquin, tecloftalam, tolnifanid, triazoxide, trichlamide, zarilamide, (3S,6S,7R,8R)-8-benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoate, 1-(4-{4-[(5R)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, 1-(4-{4-[(5S)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, 1-(4-{4-[5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, 1-(4-methoxyphenoxy)-3,3-dimethylbutan-2-yl 1H-imidazole-1-carboxylate, 2,3,5,6-tetrachloro-4-(methylsulfonyl)pyridine, 2,3-dibutyl-6-chlorothieno[2,3-d]pyrimidin-4(3H)-one, 2,6-dimethyl-1H,5H-[1,4]dithiino[2,3-c:5,6-c']dipyrrole-1,3,5,7(2H,6H)-tetrone, 2-[5-methyl-3-(trifluoromethyl)-1H-pyrazol-1-yl]-1-(4-{4-[(5R)-5-phenyl-4,5-dihydro-1,2-oxazol-3-yl]-1,3-thiazol-2-yl)piperidin-1-yl)ethanone, 2-[5-methyl-3-(trifluoromethyl)-1H-pyrazol-1-yl]-1-(4-{4-[(5S)-5-phenyl-4,5-dihydro-1,2-oxazol-3-yl]-1,3-thiazol-2-yl}piperidin-1-yl)ethanone, 2-[5-methyl-3-(trifluoromethyl)-1H-pyrazol-1-yl]-1-{4-[4-(5-phenyl-4,5-dihydro-1,2-oxazol-3-yl)-1,3-thiazol-2-yl]piperidin-1-yl}ethanone, 2-butoxy-6-iodo-3-propyl-4H-chromen-4-one, 2-chloro-5-[2-chloro-1-(2,6-difluoro-4-methoxyphenyl)-4-methyl-1H-imidazol-5-yl]pyridine, 2-phenylphenol and salts thereof, 3-(4,4,5-trifluoro-3,3-dimethyl-3,4-dihydroisoquinolin-1-yl)quinoline, 3,4,5-trichloropyridine-2,6-dicarbonitrile, 3-[5-(4-chlorophenyl)-2,3-dimethyl-1,2-oxazolidin-3-yl]pyridine, 3-chloro-5-(4-chlorophenyl)-4-(2,6-difluorophenyl)-6-methylpyridazine, 4-(4-chlorophenyl)-5-(2,6-difluorophenyl)-3,6-dimethylpyridazine, 5-amino-1,3,4-thiadiazole-2-thiol, 5-chloro-N'-phenyl-N'-(prop-2-yn-1-yl)thiophene-2-sulfonohydrazide, 5-fluoro-2-[(4-fluorobenzyl)oxy]pyrimidine-4-amine, 5-fluoro-2-[(4-methylbenzyl)oxy]pyrimidine-4-amine, 5-methyl-6-octyl[1,2,4]triazolo[1,5-a]pyrimidine-7-amine, ethyl (2Z)-3-amino-2-cyano-3-phenylprop-2-enoate, N'-(4-{[3-(4-chlorobenzyl)-1,2,4-thiadiazol-5-yl]oxy}-2,5-dimethylphenyl)-N-ethyl-N-methylimidoformamide, N-(4-chlorobenzyl)-3-[3-methoxy-4-(prop-2-yn-1-yloxy)phenyl]propanamide, N-[(4-chlorophenyl)(cyano)methyl]-3-[3-methoxy-4-(prop-2-yn-1-yloxy)phenyl]propanamide, N-[(5-bromo-3-chloropyridin-2-yl)methyl]-2,4-dichloropyridine-3-carboxamide, N-[1-(5-bromo-3-chloropyridin-2-yl)ethyl]-2,4-dichloropyridine-3-carboxamide, N-[1-(5-bromo-3-chloropyridin-2-yl)ethyl]-2-fluoro-4-iodopyridine-3-carboxamide, N-{(E)-[(cyclopropylmethoxy)imino][6-(difluoromethoxy)-2,3-difluorophenyl]methyl}-2-phenylacetamide, N-{(Z)-[(cyclopropylmethoxy)imino][6-(difluoromethoxy)-2,3-difluorophenyl]methyl}-2-phenylacetamide, N'-{4-[(3-tert-butyl-4-cyano-1,2-thiazol-5-yl)oxy]-2-chloro-5-methylphenyl}-N-ethyl-N-methylimidoformamide, N-methyl-2-(1-{[5-methyl-3-(trifluoromethyl)-1H-pyrazol-1-yl]acetyl}piperidin-4-yl)-N-(1,2,3,4-tetrahydronaphthalen-1-yl)-1,3-thiazole-4-carboxamide, N-methyl-2-(1-{[5-methyl-3-(trifluoromethyl)-1H-pyrazol-1-yl]acetyl}piperidin-4-yl)-N-[(1R)-1,2,3,4-tetrahydronaphthalen-1-yl]-1,3-thiazole-4-carboxamide, N-methyl-2-(1-{[5-methyl-3-(trifluoromethyl)-1H-pyrazol-1-yl]acetyl}piperidin-4-yl)-N-[(1S)-1,2,3,4-tetrahydronaphthalen-1-yl]-1,3-thiazole-4-carboxamide, pentyl {6-[({[(1-metoyl-1H-tetrazol-5-yl)(phenyl)methylidene]amino}oxy)methyl]pyridin-2-yl}carbamate, phenazine-1-carboxylic acid, quinolin-8-ol, quinolin-8-ol sulfate (2:1) and tert-butyl {6-[({[(1-methyl-1H-tetrazol-5-yl)(phenyl)methylene]amino}oxy)methyl]pyridin-2-yl}carbamate.
(16) Further compounds, for example 1-methyl-3-(trifluoromethyl)-N-[2'-(trifluoromethyl)biphenyl-2-yl]-1H-pyrazole-4-carboxamide, N-(4'-chlorobiphenyl-2-yl)-3-(difluoromethyl)-1-methyl-1H-pyrazole-4-carboxamide, N-(2',4'-dichlorobiphenyl-2-yl)-3-(difluoromethyl)-1-methyl-1H-pyrazole-4-carboxamide, 3-(difluoromethyl)-1-methyl-N-[4'-(trifluoromethyl)biphenyl-2-yl]-1H-pyrazole-4-carboxamide, N-(2',5'-difluorobiphenyl-2-yl)-1-methyl-3-(trifluoromethyl)-1H-pyrazole-4-carboxamide, 3-(difluoromethyl)-1-methyl-N-[4'-(prop-1-yn-1-yl)biphenyl-2-yl]-1H-pyrazole-4-carboxamide, 5-fluoro-1,3-dimethyl-N-[4'-(prop-1-yn-1-yl)biphenyl-2-yl]-1H-pyrazole-4-carboxamide, 2-chloro-N-[4'-(prop-1-yn-1-yl)biphenyl-2-yl]pyridine-3-carboxamide, 3-(difluoromethyl)-N-[4'-(3,3-dimethylbut-1-yn-1-yl)biphenyl-2-yl]-1-methyl-1H-pyrazole-4-carboxamide, N-[4'-(3,3-dimethylbut-1-yn-1-yl)biphenyl-2-yl]-5-fluoro-1,3-dimethyl-1H-pyrazole-4-carboxamide, 3-(difluoromethyl)-N-(4'-ethynylbiphenyl-2-yl)-1-methyl-1H-pyrazole-4-carboxamide, N-(4'-ethynylbiphenyl-2-yl)-5-fluoro-1,3-dimethyl-1H-pyrazole-4-carboxamide, 2-chloro-N-(4'-ethynylbiphenyl-2-yl)pyridine-3-carboxamide, 2-chloro-N-[4'-(3,3-dimethylbut-1-yn-1-yl)biphenyl-2-yl]pyridine-3-carboxamide, 4-(difluoromethyl)-2-methyl-N-[4'-(trifluoromethyl)biphenyl-2-yl]-1,3-thiazole-5-carboxamide, 5-fluoro-N-[4'-(3-hydroxy-3-methylbut-1-yn-1-yl)biphenyl-2-yl]-1,3-dimethyl-1H-pyrazole-4-carboxamide, 2-chloro-N-[4'-(3-hydroxy-3-methylbut-1-yn-1-yl)biphenyl-2-yl]pyridine-3-carboxamide, 3-(difluoromethyl)-N-[4'-(3-methoxy-3-methylbut-1-yn-1-yl)biphenyl-2-yl]-1-methyl-1H-pyrazole-4-carboxamide, 5-fluoro-N-[4'-(3-methoxy-3-methylbut-1-yn-1 -yl)biphenyl-2-yl]-1,3-dimethyl-1H-pyrazole-4-carboxamide, 2-chloro-N-[4'-(3-methoxy-3-methylbut-1-yn-1-yl)biphenyl-2-yl]pyridine-3-carboxamide, (5-bromo-2-methoxy-4-methylpyridin-3-yl)(2,3,4-trimethoxy-6-methylphenyl)methanone, N-[2-(4-{[3-(4-chlorophenyl)prop-2-yn-1-yl]oxy}-3-methoxyphenyl)ethyl]-N2-(methylsulfonyl)valinamide, 4-oxo-4-[(2-phenylethyl)amino]butanoic acid and but-3-yn-1-yl {6-[({[(Z)-(1-methyl-1H-tetrazol-5-yl)(phenyl)methylene]amino}oxy)methyl]pyridin-2-yl}carbamate.

Examples of bactericides include:
bronopol, dichlorophen, nitrapyrin, nickel dimethyldithiocarbamate, kasugamycin, octhilinone, furancarboxylic acid, oxytetracyclin, probenazole, streptomycin, tecloftalam, copper sulfate and other copper preparations.

Examples of insecticides, acaricides and nematicides include:
(1) Acetylcholinesterase (AChE) inhibitors, such as carbamates, e.g. alanycarb, aldicarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC and xylylcarb; or organophosphates, e.g. acephate, azamethiphos, azinphos-ethyl, azinphos-methyl, cadusafos, chlorethoxyfos, chlorfenvinphos, chlormephos, chlorpyrifos, chlorpyrifosmethyl, coumaphos, cyanophos, demeton-S-methyl, diazinon, dichlorvos/DDVP, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothiophosphoryl) salicylate, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, triclorfon and vamidothion.
(2) GABA-gated chloride channel antagonists, for example cyclodiene-organochlorines, e.g. chlordane and endosulfan; or phenylpyrazoles (fiproles), e.g. ethiprole and fipronil.
(3) Sodium channel modulators/voltage-gated sodium channel blockers, for example pyrethroids, e.g. acrinathrin, allethrin, d-cis-trans allethrin, d-trans allethrin, bifenthrin, bioallethrin, bioallethrin s-cyclopentenyl isomer, bioresmethrin, cycloprothrin, cyfluthrin, beta-cyfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin [(1 R)-trans isomers], deltamethrin, empenthrin [(EZ)-(1 R) isomers], esfenvalerate, etofenprox, fenpropathrin, fenvalerate, flucythrinate, flumethrin, tau-fluvalinate, halfenprox, imiprothrin, kadethrin, permethrin, phenothrin [(1 R)-trans isomer], prallethrin, pyrethrins (pyrethrum), resmethrin, silafluofen, tefluthrin, tetramethrin, tetramethrin [(1R) isomers)], tralomethrin and transfluthrin; or DDT; or methoxychlor.
(4) Nicotinergic acetylcholine receptor (nAChR) agonists, for example neonicotinoids, e.g. acetamiprid, clothianidin, dinotefuran, imidacloprid, nitenpyram, thiacloprid and thiamethoxam; or nicotine.
(5) Allosteric activators of the nicotinergic acetylcholine receptor (nAChR), for example spinosyns, e.g. spinetoram and spinosad.
(6) Chloride channel activators, for example avermectins/milbemycins, e.g. abamectin, emamectin benzoate, lepimectin and milbemectin.
(7) Juvenile hormone imitators, for example juvenile hormone analogs e.g. hydroprene, kinoprene and methoprene; or fenoxycarb; or pyriproxyfen.
(8) Active ingredients with unknown or nonspecific mechanisms of action, for example alkyl halides, e.g. methyl bromide and other alkyl halides; or chloropicrin; or sulfuryl fluoride; or borax; or tartar emetic.
(9) Selective antifeedants, e.g. pymetrozine; or flonicamid.
(10) Mite growth inhibitors, e.g. clofentezine, hexythiazox and diflovidazin or etoxazole.
(11) Microbial disruptors of the insect gut membrane, e.g. Bacillus thuringiensis subspecies israelensis, Bacillus sphaericus, Bacillus thuringiensis subspecies aizawai, Bacillus thuringiensis subspecies kurstaki, Bacillus thuringiensis subspecies tenebrionis, and BT plant proteins: Cry1Ab, Cry1Ac, Cry1Fa, Cry2Ab, mCry3A, Cry3Ab, Cry3Bb, Cry34/35Ab1.
(12) Oxidative phosphorylation inhibitors, ATP disruptors, for example diafenthiuron; or organotin compounds, e.g. azocyclotin, cyhexatin and fenbutatin oxide; or propargite; or tetradifon.
(13) Oxidative phosphorylation decouplers that interrupt the H proton gradient, for example chlorfenapyr, DNOC and sulfluramid.
(14) Nicotinergic acetylcholine receptor antagonists, for example bensultap, cartap hydrochloride, thiocyclam, and thiosultap-sodium.
(15) Chitin biosynthesis inhibitors, type 0, for example bistrifluron, chlorfluazuron, diflubenzuron, flucycloxuron, flufenoxuron, hexaflumuron, lufenuron, novaluron, noviflumuron, teflubenzuron and triflumuron.
(16) Chitin biosynthesis inhibitors, type 1, for example buprofezin.
(17) Moulting disruptors, dipteran, for example cyromazine.
(18) Ecdysone receptor agonists, for example chromafenozide, halofenozide, methoxyfenozide and tebufenozide.
(19) Octopaminergic agonists, for example amitraz.
(20) Complex-III electron transport inhibitors, for example hydramethylnon; or acequinocyl; or fluacrypyrim.
(21) Complex-I electron transport inhibitors, for example METI acaricides, e.g. fenazaquin, fenpyroximate, pyrimidifen, pyridaben, tebufenpyrad and tolfenpyrad; or rotenone (Derris).
(22) Voltage-gated sodium channel blockers, for example indoxacarb; or metaflumizone.
(23) Inhibitors of acetyl-CoA carboxylase, for example tetronic and tetramic acid derivatives, e.g. spirodiclofen, spiromesifen and spirotetramat.
(24) Complex-IV electron transport inhibitors, for example phosphines, e.g. aluminum phosphide, calcium phosphide, phosphine and zinc phosphide; or cyanide.
(25) Complex-II electron transport inhibitors, for example cyenopyrafen.
(28) Ryanodine receptor effectors, for example diamides, e.g. chlorantraniliprole and flubendiamide.

Further active ingredients with an unknown mechanism of action, for example amidoflumet, azadirachtin, benclothiaz, benzoximate, bifenazate, bromopropylate, chinomethionat, cryolite, cyantraniliprole (Cyazypyr), cyflumetofen, dicofol, diflovidazin, fluensulfone, flufenerim, flufiprole, fluopyram, fufenozide, imidaclothiz, iprodione, pyridalyl, pyrifluquinazon and iodomethane; and additionally preparations based on Bacillus firmus (I-1582, BioNeem, Votivo).

Examples of herbicides include:
acetochlor, acibenzolar, acibenzolar-S-methyl, acifluorfen, acifluorfen-sodium, aclonifen, alachlor, allidochlor, alloxydim, alloxydim-sodium, ametryn, amicarbazone, amidochlor, amidosulfuron, aminocyclopyrachlor, aminocyclopyrachlor-potassium, aminocyclopyrachlor-methyl, aminopyralid, amitrole, ammonium sulfamate, ancymidol, anilofos, asulam, atrazine, aviglycine, azafenidin, azimsulfuron, aziprotryne, beflubutamid, benazolin, benazolin-ethyl, bencarbazone, benfluralin, benfuresate, bensulide, bensulfuron, bensulfuron-methyl, bentazone, benzfendizone, benzobicyclon, benzofenap, benzofluor, benzoylprop, benzyladenine, bicyclopyrone, bifenox, bilanafos, bilanafos-sodium, bispyribac, bispyribac-sodium, bromacil, bromobutide, bromofenoxim, bromoxynil, bromuron, buminafos, busoxinone, butachlor, butafenacil, butamifos, butenachlor, butralin, butroxydim, butylate, cafenstrole, carbaryl, carbetamide, carfentrazone, carfentrazone-ethyl, carvone, chlorocholine chloride, chlomethoxyfen, chloramben, chlorazifop, chlorazifop-butyl, chlorbromuron, chlorbufam, chlorfenac, chlorfenac-sodium, chlorfenprop, chlorflurenol, chlorflurenol-methyl, chloridazon, chlorimuron, chlorimuron-ethyl, chlormequat-chloride, chlornitrofen, 4-chlorophenoxyacetic acid, chlorophthalim, chlorpropham, chlorthal-dimethyl, chlortoluron, chlorsulfuron, cinidon, cinidon-ethyl, cinmethylin, cinosulfuron, clethodim, clodinafop, clodinafop-propargyl, clofencet, clomazone, clomeprop, cloprop, clopyralid, cloransulam, cloransulam-methyl, cloxyfonac, cumyluron, cyanamide, cyanazine, cyclanilide, cycloate, cyclosulfamuron, cycloxydim, cycluron, cyhalofop, cyhalofop-butyl, cyperquat, cyprazine, cyprazole, cytokinine, 2,4-D, 2,4-DB, daimuron/dymron, dalapon, daminozide, dazomet, n-decanol, desmedipham, desmetryn, detosyl-pyrazolate (DTP), diallate, diaminozide, dicamba, dichlobenil, dichlorprop, dichlorprop-P, diclofop, diclofop-methyl, diclofop-P-methyl, diclosulam, diethatyl, diethatyl-ethyl, difenoxuron, difenzoquat, diflufenican, diflufenzopyr, diflufenzopyr-sodium, dikegulacsodium, dimefuron, dimepiperate, dimethachlor, dimethametryn, dimethenamid, dimethenamid-P, dimethipin, dimetrasulfuron, dinitramine, dinoseb, dinoterb, diphenamid, diisopropylnaphthalene, dipropetryn, diquat, diquat-dibromide, dithiopyr, diuron, DNOC, eglinazine-ethyl, endothal, EPTC, esprocarb, ethalfluralin, ethametsulfuron, ethametsulfuron-methyl, ethyl naphthylacetate, ethephon, ethidimuron, ethiozin, ethofumesate, ethoxyfen, ethoxyfen-ethyl, ethoxysulfuron, etobenzanid, F-5331, i.e. N-[2-chloro-4-fluoro-5-[4-(3-fluoropropyl)-4,5-dihydro-5-oxo-1H-tetrazol-1-yl]phenyl]ethanesulfonamide, F-7967, i.e. 3-[7-chloro-5-fluoro-2-(trifluoromethyl)-1H-benzimidazol-4-yl]-1-methyl-6-(trifluoromethyl)pyrimidine-2,4(1H,3H)-dione, fenoprop, fenoxaprop, fenoxaprop-P, fenoxaprop-ethyl, fenoxaprop-P-ethyl, fenoxasulfone, fentrazamide, fenuron, flamprop, flamprop-M-isopropyl, flamprop-M-methyl, flazasulfuron, florasulam, fluazifop, fluazifop-P, fluazifop-butyl, fluazifop-P-butyl, fluazolate, flucarbazone, flucarbazone-sodium, flucetosulfuron, fluchloralin, flufenacet (thiafluamide), flufenpyr, flufenpyr-ethyl, flumetralin, flumetsulam, flumiclorac, flumiclorac-pentyl, flumioxazin, flumipropyn, fluometuron, fluorodifen, fluoroglycofen, fluoroglycofen-ethyl, flupoxam, flupropacil, flupropanate, flupyrsulfuron, flupyrsulfuron-methyl-sodium, flurenol, flurenol-butyl, fluridone, flurochloridone, fluroxypyr, fluroxypyr-meptyl, flurprimidol, flurtamone, fluthiacet, fluthiacet-methyl, fluthiamide, fomesafen, foramsulfuron, forchlorfenuron, fosamine, furyloxyfen, gibberellic acid, glufosinate, glufosinate-ammonium, glufosinate-P, glufosinate-P-ammonium, glufosinate-P-sodium, glyphosate, glyphosate-isopropylammonium, H-9201, i.e. O-(2,4-dimethyl-6-nitrophenyl) O-ethyl isopropylphosphoramidothioate, halosafen, halosulfuron, halosulfuron-methyl, haloxyfop, haloxyfop-P, haloxyfop-ethoxyethyl, haloxyfop-P-ethoxyethyl, haloxyfopmethyl, haloxyfop-P-methyl, hexazinone, HW-02, i.e. 1-(dimethoxyphosphoryl)ethyl (2,4-dichlorophenoxy)acetate, imazamethabenz, imazamethabenz-methyl, imazamox, imazamox-ammonium, imazapic, imazapyr, imazapyr-isopropylammonium, imazaquin, imazaquin-ammonium, imazethapyr, imazethapyrammonium, imazosulfuron, inabenfide, indanofan, indaziflam, indoleacetic acid (IAA), 4-indol-3-ylbutyric acid (IBA), iodosulfuron, iodosulfuron-methyl-sodium, iofensulfuron, iofensulfuron-sodium, ioxynil, ipfencarbazone, isocarbamid, isopropalin, isoproturon, isouron, isoxaben, isoxachlortole, isoxaflutole, isoxapyrifop, KUH-043, i.e. 3-({[5-(difluoromethyl)-1-methyl-3-(trifluoromethyl)-1H-pyrazol-4-yl]methyl}sulfonyl)-5,5-dimethyl-4,5-dihydro-1,2-oxazole, karbutilate, ketospiradox, lactofen, lenacil, linuron, maleic hydrazide, MCPA, MCPB, MCPB-methyl, -ethyl and - sodium, mecoprop, mecoprop-sodium, mecoprop-butotyl, mecoprop-P-butotyl, mecoprop-P-dimethylammonium, mecoprop-P-2-ethylhexyl, mecoprop-P-potassium, mefenacet, mefluidide, mepiquat-chloride, mesosulfuron, mesosulfuron-methyl, mesotrione, methabenzthiazuron, metam, metamifop, metamitron, metazachlor, metazasulfuron, methazole, methiopyrsulfuron, methiozolin, methoxyphenone, methyldymron, 1-methylcyclopropene, methyl isothiocyanate, metobenzuron, metobromuron, metolachlor, S-metolachlor, metosulam, metoxuron, metribuzin, metsulfuron, metsulfuron-methyl, molinate, monalide, monocarbamide, monocarbamide dihydrogensulfate, monolinuron, monosulfuron, monosulfuron ester, monuron, MT-128, i.e. 6-chloro-N-[(2E)-3-chloroprop-2-en-1-yl]-5-methyl-N-phenylpyridazine-3-amine, MT-5950, i.e. N-[3-chloro-4-(1-methylethyl)phenyl]-2-methylpentanamide, NGGC-011, 1-naphthylacetic acid (NAA), naphthylacetamide (NAAm), 2-naphthoxyacetic acid, naproanilide, napropamide, naptalam, NC-310, i.e. 4-(2,4-dichlorobenzoyl)-1-methyl-5-benzyloxypyrazole, neburon, nicosulfuron, nipyraclofen, nitralin, nitrofen, nitroguaiacolate, nitrophenolate-sodium (isomer mixture), nitrofluorfen, nonanoic acid, norflurazon, orbencarb, orthosulfamuron, oryzalin, oxadiargyl, oxadiazon, oxasulfuron, oxaziclomefone, oxyfluorfen, paclobutrazole, paraquat, paraquat dichloride, pelargonic acid (nonanoic acid), pendimethalin, pendralin, penoxsulam, pentanochlor, pentoxazone, perfluidone, pethoxamid, phenisopham, phenmedipham, phenmedipham-ethyl, picloram, picolinafen, pinoxaden, piperophos, pirifenop, pirifenop-butyl, pretilachlor, primisulfuron, primisulfuron-methyl, probenazole, profluazole, procyazine, prodiamine, prifluraline, profoxydim, prohexadione, prohexadione-calcium, prohydrojasmone, prometon, prometryn, propachlor, propanil, propaquizafop, propazine, propham, propisochlor, propoxycarbazone, propoxycarbazone-sodium, propyrisulfuron, propyzamide, prosulfalin, prosulfocarb, prosulfuron, prynachlor, pyraclonil, pyraflufen, pyraflufen-ethyl, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinmerac, quinoclamine, quizalofop, quizalofop-ethyl, quizalofop-P, quizalofop-P-ethyl, quizalofop-P-tefuryl, rimsulfuron, saflufenacil, secbumeton, sethoxydim, siduron, simazine, simetryn, SN-106279, i.e. methyl (2R)-2-({7-[2-chloro-4-(trifluoromethyl)phenoxy]-2-naphthyl}oxy)propanoate, sulcotrione, sulfallate (CDEC), sulfentrazone, sulfometuron, sulfometuron-methyl, sulfosate (glyphosate-trimesium), sulfosulfuron, SW-065, SYN-523, SYP-249, i.e. 1-ethoxy-3-methyl-1-oxobut-3-en-2-yl 5-[2-chloro-4-(trifluoromethyl)phenoxy]-2-nitrobenzoate, SYP-300, i.e. 1-[7-fluoro-3-oxo-4-(prop-2-yn-1-yl)-3,4-dihydro-2H-1,4-benzoxazin-6-yl]-3-propyl-2-thioxoimidazolidine-4,5-dione, tebutam, tebuthiuron, tecnazene, tefuryltrione, tembotrione, tepraloxydim, terbacil, terbucarb, terbuchlor, terbumeton, terbuthylazine, terbutryne, thenylchlor, thiafluamide, thiazafluron, thiazopyr, thidiazimin, thidiazuron, thiencarbazone, thiencarbazone-methyl, thifensulfuron, thifensulfuron-methyl, thiobencarb, tiocarbazil, topramezone, tralkoxydim, triafamone, triallate, triasulfuron, triaziflam, triazofenamide, tribenuron, tribenuron-methyl, tribufos, trichloroacetic acid (TCA), triclopyr, tridiphane, trietazine, trifloxysulfuron, trifloxysulfuron-sodium, trifluralin, triflusulfuron, triflusulfuron-methyl, trimeturon, trinexapac, trinexapac-ethyl, tritosulfuron, tsitodef, uniconazole, uniconazole-P and vernolate, ZJ-0862, i.e. 3,4-dichloro-N-{2-[(4,6-dimethoxypyrimidin-2-yl)oxy]benzyl}aniline, and the following compounds:

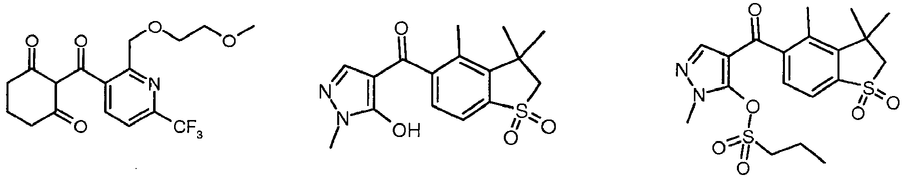

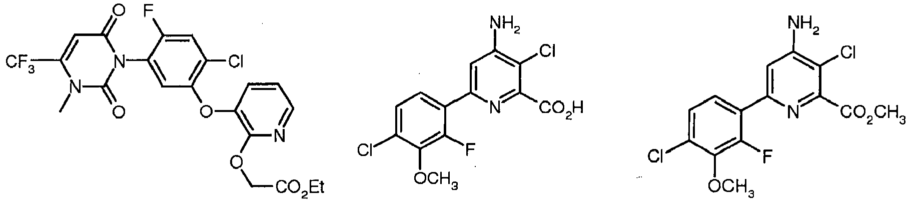

Phytohormones control physiological reactions, such as growth, flowering rhythm, cell division and seed ripening. Examples of growth regulators include natural and synthetic plant hormones such as abscisic acid, benzyladenine, caprylic acid, decanol, indoleacetic acid, jasmonic acid and esters thereof, salicylic acid and esters thereof, gibberellic acid, kinetin and brassinosteroids.

Biological control agents are known to those skilled in the art and are described, for example, in "The Manual of Biocontrol Agents: A World Compendium, Copping, L. G., BCPC 2009".

Examples of plant nutrients include customary inorganic or organic fertilizers for supplying plants with macro- and/or micronutrients.

Examples of repellents include diethyltolylamide, ethylhexanediol and butopyronoxyl.

Examples of safeners include AD 67, benoxacor, cyprosulfamide, cloquintocet, cloquintocet-mexyl, cyometrinil, dichlormid, dicyclonon, fenclorim, fenchlorazole-ethyl, flurazole, fluxofenim, furilazole, isoxadifen-ethyl, mefenpyr-diethyl, oxabetrinil, R29148, and TI-35.

The agrochemical substances are preferably selected from the group consisting of herbicides, insecticides, fungicides, safeners and growth regulators. More preferably, the agrochemical substances are selected from the group consisting of herbicides, safeners and growth regulators.

Preferred fungicides are aliphatic nitrogen fungicides, amide fungicides such as acyl amino acid fungicides or anilide fungicides or benzamide fungicides or strobilurin fungicides, aromatic fungicides, benzimidazole fungicides, benzothiazole fungicides, carbamate fungicides, conazole fungicides such as imidazoles or triazoles, dicarboximide fungicides, dithiocarbamate fungicides, imidazole fungicides, morpholine fungicides, oxazole fungicides, pyrazole fungicides, pyridine fungicides, pyrimidine fungicides, pyrrole fungicides, quinone fungicides and spiroketalamines. More preferably, the fungicides are selected from the group consisting of morpholine fungicides, preferably fenpropidin or fenpropimorph, and spiroketalamines, preferably spiroxamine. These fungicides are known for a high human toxicity in sublethal doses.

Preferred insecticides are carbamate insecticides such as benzofuranylmethyl carbamate insecticides or dimethyl carbamate insecticides or oxime carbamate insecticides or phenyl methylcarbamate insecticides, diamide insecticides, insect growth regulators, macrocyclic lactone insecticides such as avermectin insecticides or milbemycin insecticides or spinosyn insecticides, nereistoxin analog insecticides, neonicotinoids, nicotinoid insecticides such as nitroguanidine nicotinoid insecticides or pyridylmethylamine nicotinoid insecticides, organophosphorus insecticides such as organophosphate insecticides or organothiophosphate insecticides or phosphonate insecticides or phosphoramidothioate insecticides, oxadiazine insecticides, pyrazole insecticides, pyrethroid insecticides such as pyrethroid ester insecticides or pyrethroid ether insecticides or pyrethroid oxime insecticides, tetramic acid insecticides, tetrahydrofurandione insecticides, thiazole insecticides. More preferably, the insecticides are selected from the group consisting of organophosphorus insecticides, preferably dimethoate, and neonicotinoids. These insecticides are known for a high toxicity to useful organisms and bees in sublethal doses.

Preferred herbicides are amide herbicides, anilide herbicides, aromatic acid herbicides such as benzoic acid herbicides or picolinic acid herbicides, benzoylcyclohexanedione herbicides, benzofuranyl alkylsulfonate herbicides, benzothiazole herbicides, carbamate herbicides, carbanilate herbicides, cyclohexene oxime herbicides, cyclopropylisooxazole herbicides, dicarboximide herbicides, dinitroaniline herbicides, dinitrophenol herbicides, diphenyl ether herbicides, dithiocarbamate herbicides, glycine derivative herbicides, imidazolinone herbicides, isoxazole herbicides, isoxazolidinone herbicides, nitrile herbicides, organophosphorus herbicides, oxadiazolone herbicides, oxazole herbicides, phenoxy herbicides such as phenoxyacetic acid herbicides or phenoxybutanoic acid herbicides or phenoxypropionic acid herbicides or aryloxyphenoxypropionic acid herbicides, phenylpyrazoline herbicides, pyrazole herbicides such as benzoylpyrazole herbicides or phenylpyrazole herbicides, pyridazinone herbicides, pyridine herbicides, pyrimidinedione herbicides, thiocarbamate herbicides, triazine herbicides, triazinone herbicides, triazole herbicides, triazolone herbicides, triazolopyrimidine herbicides, triketone herbicides, uracil herbicides, urea herbicides such as phenylurea herbicides or sulfonylurea herbicides. More preferably, the herbicides are selected from the group consisting of benzoic acid herbicides, preferably dicamba or salts thereof, cyclohexene oxime herbicides, preferably clethodim, diphenyl ether herbicides, preferably aclonifen, isoxazolidinone herbicides, preferably clomazone, and phenoxy herbicides, preferably 2,4-D or the salts and esters thereof.

Most preferred herbicides are herbicides with low melting point, such as esters of auxins and auxin-analoga, preferably esters of 2,4 - D, such as 2,4 - D butyl ester, 2,4 - D ethyl ester, 2,4 - D ethylhexyl ester, 2,4 - D isopropyl ester or 2,4 - D isooctyl ester and preferably esters of dicamba such as dicamba-butotyl ester.

These herbicides are known for high plant toxicity to non-target plants in sublethal doses.

Preferred safeners are safeners with low melting point and more preferably safeners with low melting point and comprising aromatic structural moieties such as cyometrinil, cloquintocet-mexyl, mefenpyr-diethyl or fluxofenim.

Preferred growth regulators are natural and synthetic plant hormones selected from the group consisting of alcohols, preferably decanol, auxins, preferably indoleacetic acid, cytokinins, preferably benzyladenine, fatty acids, preferably caprylic acid, gibberellins, preferably gibberellic acid, jasmonates, preferably jasmonic acid or esters thereof, sesquiterpenes, preferably abscisic acid, and salicylic acid or esters thereof.

Especially preferred one or more agrochemical substances are one or more pesticides selected from the group consisting of aclonifen, clethodim, 2,4-D or salts or esters thereof, dicamba or salts thereof, dimethoate, fenpropidin, fenpropimorph and spiroxamine. These pesticides are known for high volatility (vapor pressure greater than 10⁻⁵ Pa) and for a high toxicity to humans, useful organisms, bees or non-target plants.

Standard formulation forms for crop treatment compositions are, for example, water-soluble liquids (SL), emulsion concentrates (EC), emulsions in water (EW), suspension concentrates (SC, SE, FS, OD), water-dispersible granules (WG), granules (GR) and capsule concentrates (CS). These and further possible formulation types are described, for example, by Crop Life International and in Pesticide Specifications, Manual on development and use of FAO and WHO specifications for pesticides, FAO Plant Production and Protection Papers - 173, prepared by the FAO/WHO Joint Meeting on Pesticide Specifications, 2004, ISBN: 9251048576.

The crop treatment compositions may optionally contain action-improving adjuvants. An adjuvant in this context is a component which enhances the biological effect of a chemically and physically stable, optimized formulation, without the component itself having any biological effect. Examples of adjuvants are penetrants, which are defined in this context by their ability to penetrate from the (generally aqueous) application liquor and/or from the spray coating into the cuticle of the plant and hence increase the mobility of active ingredients in the cuticle. The method described in the literature (Baur et al., 1997, Pesticide Science 51, 131-152) can be used to determine this property.

Examples include alcohol alkoxylates, for example coconut fat ethoxylate or isotridecyl ethoxylate, vegetable oils, for example rapeseed oil, sunflower oil, mineral oils, for example paraffin oils, alkyl esters of vegetable fatty acids, for example rapeseed oil methyl ester or soya oil methyl ester, fatty amine alkoxylates, for example tallowamine ethoxylate. Other examples for adjuvants are spreaders, for example alkylsiloxanes and/or salts, for example organic or inorganic ammonium or phosphonium salts, for example ammonium sulfate or diammonium hydrogenphosphate and/or retention promoters, for example dioctyl sulfosuccinate or hydroxypropylguar polymers and/or humectants, for example glycerol and/or fertilizers, for example ammonium-, potassium- or phosphorus-containing fertilizers and/or agents which promote sticking to the leaf surface.

Optionally, the crop treatment compositions may contain auxiliaries, preferably in combination with the abovementioned adjuvants. The auxiliaries may, for example, be extenders, solvents, spontaneity promoters, carriers, emulsifiers, dispersants, antifreezes, biocides and/or thickeners.

The crop treatment compositions are produced in a known manner, by mixing the components with one another in the particular ratios desired, for example by mixing the active ingredients with auxiliaries, for example extenders, solvents and/or solid carriers and/or further auxiliaries, for example surfactants. The crop treatment compositions are produced as formulations either in suitable facilities or else before or during application.
If the agrochemical substance is a solid substance, it is generally used either in finely ground form or in the form of a solution or suspension in an organic solvent or water. If the agrochemical substance is liquid, there is frequently no need to use an organic solvent. It is also possible to use a solid agrochemical substance in the form of a melt. The temperatures can be varied within a particular range in the course of performance of the process. In general, working temperatures are between 0 °C and 80°C, preferably between 10 °C and 60 °C.

Auxiliaries used may be those substances which are suitable for imparting particular properties, such as particular physical, technical and/or biological properties, to the formulation of the active ingredient or to the use forms prepared from these formulations (for example ready-to-use crop protection compositions such as spray liquors or seed dressing products).

Suitable extenders are, for example, water, polar and nonpolar organic chemical liquids, for example from the classes of the aromatic and nonaromatic hydrocarbons (such as paraffins, alkylbenzenes, alkylnaphthalenes, chlorobenzenes), the alcohols and polyols (which may optionally also be substituted, etherified and/or esterified), the ketones (such as acetone, cyclohexanone), esters (including fats and oils) and (poly)ethers, the unsubstituted and substituted amines, amides, lactams (such as N-alkylpyrrolidones) and lactones, the sulfones and sulfoxides (such as dimethyl sulfoxide).

In principle, it is possible to use any suitable solvents. Examples of suitable solvents are besides aromatic solvents b), such as aromatic hydrocarbons, for example xylene, toluene or alkylnaphthalenes, chlorinated aromatic hydrocarbons, for example chlorobenzene or chloroethylene, also non-aromatic solvents, such as aliphatic hydrocarbons, for example cyclohexane, paraffins, mineral oil fractions, chlorinated aliphatic hydrocarbons, for example methylene chloride, or mineral and vegetable oils, alcohols, for example methanol, ethanol, isopropanol, butanol or glycol and the ethers and esters thereof, ketones, for example acetone, methyl ethyl ketone, methyl isobutyl ketone or cyclohexanone, strongly polar solvents such as dimethylformamide and dimethyl sulfoxide, and also water.

In principle, it is possible to use any suitable carriers. Useful carriers especially include: for example ammonium salts and natural rock flour such as kaolins, aluminas, talc, chalk, quartz, attapulgite, montmorillonite or diatomaceous earth, and synthetic rock flour such as finely divided silica, aluminum oxide and natural or synthetic silicates, resins, waxes and/or solid fertilizers. It is likewise possible to use mixtures of such carriers. Useful carriers for granules include: for example crushed and fractionated natural rocks such as calcite, marble, pumice, sepiolite, dolomite, and synthetic granules of inorganic and organic flours, and also granules of organic material such as sawdust, paper, coconut shells, corn cobs and tobacco stalks.

It is also possible to use liquefied gaseous extenders or solvents. Especially suitable are those extenders or carriers which are gaseous at standard temperature and under standard pressure, for example aerosol propellants such as halohydrocarbons, or else butane, propane, nitrogen and carbon dioxide.

Examples of emulsifiers and/or foam formers, dispersants or wetting agents with ionic or nonionic properties, or mixtures of these surfactants, are salts of polyacrylic acid, salts of lignosulfonic acid, salts of phenolsulfonic acid or naphthalenesulfonic acid, polycondensates of ethylene oxide with fatty alcohols or with fatty acids or with fatty amines, with substituted phenols (preferably alkylphenols or arylphenols), salts of sulfosuccinic esters, taurine derivatives (preferably alkyl taurates), phosphoric esters of polyethoxylated alcohols or phenols, fatty acid esters of polyols, and derivatives of the compounds containing sulfates, sulfonates and phosphates, for example alkylaryl polyglycol ethers, alkyl sulfonates, alkyl sulfates, arylsulfonates, protein hydrolyzates, lignosulfite waste liquors and methyl cellulose. The presence of a surfactant is advantageous when one of the active ingredients and/or one of the inert carriers is insoluble in water and when application is effected in water.

Further auxiliaries which may be present in the formulations and the use forms derived therefrom are dyes such as inorganic pigments, for example iron oxide, titanium oxide and Prussian Blue, and organic dyes such as alizarin dyes, azo dyes and metal phthalocyanine dyes, and nutrients and trace nutrients such as salts of iron, manganese, boron, copper, cobalt, molybdenum and zinc.

Additional components may be stabilizers, such as cold stabilizers, preservatives, antioxidants, light stabilizers, or other agents which improve chemical and/or physical stability. In addition, foam formers or defoamers may be present.

In addition, the formulations and the use forms derived therefrom may also comprise, as additional auxiliaries, stickers such as carboxymethyl cellulose and natural and synthetic polymers in the form of powders, granules or latices, such as gum arabic, polyvinyl alcohol and polyvinyl acetate, or else natural phospholipids such as cephalins and lecithins and synthetic phospholipids. Further possible auxiliaries are mineral and vegetable oils.

It is possible if appropriate for still further auxiliaries to be present in the formulations and the use forms derived therefrom. Examples of such additives are fragrances, protective colloids, binders, adhesives, thickeners, thixotropic agents, penetrants, retention promoters, stabilizers, sequestrants, complexing agents, humectants, spreaders.

In general, the agrochemical substances can be combined with any solid or liquid additive which is commonly used for formulation purposes.

Useful retention promoters include all those substances which reduce dynamic surface tension, for example dioctyl sulfosuccinate, or increase viscoelasticity, for example hydroxypropylguar polymers.

Useful penetrants in the present context are all those substances which are typically used to improve the penetration of agrochemical substances into plants.

The crop treatment compositions contain preferably between 0.00000001 % and 98 % by weight of agrochemical substances, more preferably between 0.01 % and 95 % by weight of agrochemical substances and especially preferably between 0.5 % and 90 % by weight of agrochemical substances, based on the weight of the crop treatment compositions.

The content of agrochemical substances in the use forms (crop protection compositions) prepared from the crop treatment compositions can vary within wide limits. The concentration of the agrochemical substances in the use forms, especially in the spray liquors, may typically be between 0.00000001 % and 95 % by weight of agrochemical substance, preferably between 0.00001 % and 5 % by weight of agrochemical substance, more preferably between 0.00001 % and 1 % by weight of agrochemical substance and especially preferably between 0.001 % and 1 % by weight of agrochemical substance, based on the weight of the use form, especially of the spray liquor. Application is accomplished in a customary manner appropriate to the use forms.

According to the formulation type, the production of the crop treatment compositions used in accordance with the invention is possible in various ways which are sufficiently well known to those skilled in the art. The procedure in the production may, for example, be to mix the alkoxylated vegetable oil derivatives with one or more agrochemical substances and optionally with auxiliaries. The sequence in which the components are mixed with one another is arbitrary. Useful equipment in the production is customary equipment which is used for production of agrochemical formulations.

In the use according to the invention, crop treatment compositions are preferably deployed in the form of spray liquids. This preferably involves production of a spray liquid by dilution of a concentrate formulation with a defined amount of water.

The invention further provides a method for reducing drift in the application of plant treatment compositions, wherein a preferably aqueous spray liquid is sprayed onto the plants to be treated or the site thereof, the spray liquid contains one or more alkyl benzene sulfonate surfactants according to formula (I) and one or more aromatic solvents and the combined amount of the one or more alkyl benzene sulfonate surfactants according to formula (I) and of the aromatic solvents in the spray liquid is preferably from 0.001 % to 5 % by weight, more preferably from 0.005 % to 3 % by weight, especially preferably from 0.01 % to 1 % by weight and exceptionally preferably from 0.03 % to 0.5 % by weight, based in each case on the total weight of the spray liquid. The spray liquid used in the method of the invention further preferably contains one or more agrochemical substances.

The invention further provides plant treatment compositions for reducing drift during the application thereof to a plant containing one or more of the alkyl benzene sulfonate surfactants according to formula (I) and one or more of the aromatic solvents described above and preferably spray liquids containing one or more of the alkyl benzene sulfonate surfactants according to formula (I) and one or more of the aromatic solvents described above, wherein the combined amount of the one or more alkyl benzene sulfonate surfactants according to formula (I) and of the one or more aromatic solvents in the spray liquid is preferably from 0.001 % to 5 % by weight, more preferably from 0.005 % to 3 % by weight, especially preferably from 0.01 % to 1 % by weight and exceptionally preferably from 0.03 % to 0.5 % by weight, based in each case on the total weight of the spray liquid. The compositions of the invention preferably further contain one or more water-soluble agrochemical substances and/or water-insoluble agrochemical substances. Preferably these agrochemical substances are pesticides.

### Examples

The present invention is illustrated in following examples, which are not intended to be limiting to the invention. In this specification, all percentages refer to % by weight if not otherwise noted.

Following raw materials have been used:
- Emulsogen^{®} EL 360: Castor oil ethoxylate, Clariant.
- Phenylsulfonate^{®} CA: Iso-alkyl benzene sulfonate calcium salt, Clariant
- Phenylsulfonate^{®} CAL: Linear alkyl benzene sulfonate calcium salt, Clariant
- Xylene: Xylene isomeric mixture, Fluka
- Solvesso 200 N: Naphthalene depleted heavy aromatic naphtha, Exxon
- Cymene: p-Cymene, Aldrich
- Ester'H: Herbicide formulation (2,4-D isooctylester 480 g/L), Hektas
- Barrage HF: Herbicide formulation (2,4-D 2-ethylhexylester 480 g/L), Helena
- Biscaya^{®}: Insecticide formulation (Thiacloprid 240 g/L), Bayer
- Input^{®} Xpro: Fungicide formulation (Prothioconazol 100 g/L, Spiroxamine 250 g/L, Bixafen 50 g/L), Bayer
- MaxCel^{®}: Plant growth regulator formulation (Benzyladenine 20 g/L), Proagro GmbH
- Synergen^{®} OS: anti-drift adjuvant based on polyglycerol ester and vegetable oil methyl ester, Clariant
- Propylene glycol: 1,2-Propanediol, Clariant
- PEG-400: Polyethylene glycol, Clariant
- 2,4-D isoctylester: 2,4-D isooctylester, Schirm

### A) Preparation of agrochemical compositions

In the following formulations illustrating different compositional aspects of this invention are described.

### A1) Surfactant compositions without aromatic solvent (not invention)

In order to prepare the surfactant compositions the components were blended together in a glass vessel until a homogeneous solution was obtained. Compositions are given in Table 1.

**Table 1**

| Formulation | F1 | F2 | F3 | F4 | F5 |
|---|---|---|---|---|---|
| Emulsogen^{®} EL 360 | 40.0 | 50.0 | 75.0 | 7.5 | 5.0 |
| Phenylsulfonate^{®} CA | 60.0 | 50.0 | 25.0 | 2.5 | 5.0 |
| Propylene glycol | - | - | - | 90 | - |
| PEG-400 | - | - | - | - | 90 |

### A2) Surfactant compositions comprising an aromatic solvent (invention)

In order to prepare the surfactant compositions comprising an aromatic solvent (Emulsion concentrates) the components were blended together in a glass vessel until a clear homogeneous solution was obtained. Compositions are given in Table 2.

**Table 2**

| Formulation | EC1 | EC2 | EC3 | EC4 | EC5 | EC6 | EC7 | EC8 | EC9 | EC10 |
|---|---|---|---|---|---|---|---|---|---|---|
| Emulsogen^{®} EL 360 | 3.0 | 6.0 | 2,5 | 6.0 | 3.5 | 7.0 | 3.5 | 7.0 | 6.0 | 4.5 |
| Phenylsulfonate^{®} CA | 2.0 | 4.0 | 2,5 | 4.0 | 1.5 | 3.0 | - | - | 4.0 | 5.5 |
| Phenylsulfonate^{®} CAL | - | - | - | - | - | - | 1.5 | 3.0 | - | |
| Xylene | 95.0 | 90.0 | - | - | - | - | - | - | 45.0 | 45.0 |
| Solvesso 200ND | - | - | 95.0 | 90.0 | - | - | - | - | 45.0 | - |
| Cymene | - | - | - | - | 95.0 | 90.0 | 95.0 | 90.0 | - | 45.0 |

### A3) Emulsion concentrate comprising a pesticide and the built-in drift reducing components (invention)

In order to prepare the formulation the components were blended together in a glass vessel until a clear homogeneous solution was obtained. The composition is given in Table 3.

**Table 3**

| Formulation | P1 |
|---|---|
| Emulsogen^{®} EL 360 | 3.0 |
| Phenylsulfonate^{®} CAL | 2.0 |
| Xylene | 20.2 |
| 2,4-D isoctylester | 74.8 |

### B) Preparation of spray solutions

### B1) Examples of aqueous spray solutions comprising no aromatic solvent (not invention)

The spray solutions have been prepared by diluting the formulations F1 - F5 (composition see tables 1 and 4) in water. After stirring homogeneous solutions are obtained.

**Table 4**

| Spray solution | Test substance | Amount of test substance in spray solution [w%] |
|---|---|---|
| A1 | Synergen OS | 0.5 |
| A2 | F1 | 0.05 |
| A3 | F1 | 0.15 |
| A4 | F2 | 0.05 |
| A5 | F2 | 0.15 |
| A6 | F3 | 0.05 |
| A7 | F3 | 0.15 |
| A8 | F3 | 0.30 |
| A9 | F4 | 0.5 |
| A10 | F5 | 0.5 |

### B2) Examples of aqueous spray solutions comprising aromatic solvent (invention)

The spray solutions have been prepared by diluting the formulations EC1 - EC10 (composition see tables 2 and 5) in water. After stirring homogeneous solutions are obtained.

**Table 5**

| Spray solution | Test substance | Amount of test substance in spray solution [w%] |
|---|---|---|
| B1 | EC1 | 0.05 |
| B2 | EC1 | 0.50 |
| B3 | EC2 | 0.05 |
| B4 | EC2 | 0.50 |
| B5 | EC3 | 0.05 |
| B6 | EC3 | 0.50 |
| B7 | EC4 | 0.05 |
| B8 | EC4 | 0.50 |
| B9 | EC5 | 0.05 |
| B10 | EC5 | 0.50 |
| B11 | EC6 | 0.05 |
| B12 | EC6 | 0.50 |
| B13 | EC7 | 0.05 |
| B14 | EC7 | 0.50 |
| B15 | EC8 | 0.05 |
| B16 | EC8 | 0.50 |
| B17 | EC9 | 0.05 |
| B18 | EC9 | 0.50 |
| B19 | EC10 | 0.05 |
| B20 | EC10 | 0.50 |

### B3) Examples of aqueous spray solutions with 2,4-D formulations

Compositions of spray solutions C1 - C9 are listed in tables 2, 3 and 6. The spray solutions have been prepared by diluting the test substance and the pesticide formulations in water. After stirring homogeneous solutions are obtained.

**Table 6**

| Spray solution | Test substance | Amount of test substance [w%] | Pesticide formulation | Amount of pesticide formulation [w%] |
|---|---|---|---|---|
| C1 | - | - | Ester'H (2,4-D isooctylester) | 1.0 |
| C2 | EC2 | 0.5 | Ester'H (2,4-D isooctylester) | 1.0 |
| C3 | EC4 | 0.5 | Ester'H (2,4-D isooctylester) | 1.0 |
| C4 | EC6 | 0.5 | Ester'H (2,4-D isooctylester) | 1.0 |
| C5 | - | - | Barrage HF (2,4-D 2-ethylhexylester) | 1.0 |
| C6 | EC2 | 0.5 | Barrage HF (2,4-D 2-ethylhexylester) | 1.0 |
| C7 | EC4 | 0.5 | Barrage HF (2,4-D 2-ethylhexylester) | 1.0 |
| C8 | EC6 | 0.5 | Barrage HF (2,4-D 2-ethylhexylester) | 1.0 |
| C9 | P1 | - | In-can 2,4-D isoctylester formulation | 1.0 |

### B4) Examples of aqueous spray solutions with fungicide formulation Input XPro

Compositions of spray solutions D1 - D4 are listed in tables 2 and 7. The spray solutions have been prepared by diluting the test substance and the pesticide formulations in water. After stirring homogeneous solutions are obtained.

**Table 7**

| Spray solution | Test substance | Amount of test substance [w%] | Pesticide formulation | Amount of pesticide formulation [w%] |
|---|---|---|---|---|
| D1 | - | - | Input Xpro | 0.75 |
| D2 | EC2 | 0.5 | Input Xpro | 0.75 |
| D3 | EC4 | 0.5 | Input Xpro | 0.75 |
| D4 | EC6 | 0.5 | Input Xpro | 0.75 |

### B5) Examples of aqueous spray solutions with plant growth regulator formulation MaxCel

Compositions of spray solutions E1 - E4 are listed in tables 2 and 8. The spray solutions have been prepared by diluting the test substance and the pesticide formulations in water. After stirring homogeneous solutions are obtained.

**Table 8**

| Spray solution | Test substance | Amount of test substance [w%] | Pesticide formulation | Amount of pesticide formulation [w%] |
|---|---|---|---|---|
| E1 | - | - | Benzyladenin MaxCel | 0.75 |
| E2 | Synergen OS | 0.5 | Benzyladenin MaxCel | 0.75 |
| E3 | EC6 | 0.5 | Benzyladenin MaxCel | 0.75 |
| E4 | EC8 | 0.5 | Benzyladenin MaxCel | 0.75 |

### B6) Examples of aqueous spray solutions with insecticide formulation Biscaya OD

Compositions of spray solutions G1 - G5 are listed in tables 2 and 9. The spray solutions have been prepared by diluting the test substance and the pesticide formulations in water. After stirring homogeneous solutions are obtained.

**Table 9**

| Spray solution | Test substance | Amount of test substance [w%] | Pesticide formulation | Amount of pesticide formulation [w%] |
|---|---|---|---|---|
| G1 | - | - | Input Xpro | 0.75 |
| G2 | Synergen OS | 0.5 | Input Xpro | 0.75 |
| G3 | EC2 | 0.5 | Input Xpro | 0.75 |
| G4 | EC4 | 0.5 | Input Xpro | 0.75 |
| G5 | EC6 | 0.5 | Input Xpro | 0.75 |

### C) Examples of use

### Measurement of droplet size distribution

A Malvern Spraytec "real-time spray sizing system" was used to determine the droplet size distribution. For this purpose, the system (STP5321, Malvern Instruments GmbH, Heidelberg, Germany) was installed in a specially constructed spray cabin, with freely adjustable pressure for various hydraulic nozzles and freely adjustable distances (nozzle-target surface) in order to simulate spray application conditions used in practice. The spray cabin can be darkened and all disruptive parameters can be switched off. For the measurements, the standard flat jet nozzle XR11002 (Teejet) with a high proportion of fine droplets (< 105 µm) in the droplet spectrum and the injector nozzles ID12002 (Lechler) and ID(3)12002 (Lechler) having coarser droplet sizes were used. The pressure set was varied, and mean pressure was kept constant at 3 bar for the measurements reported hereinafter. The temperature and relative air humidity varied between 21.5°C and 29°C and between 33% and 56% respectively. In each test series, tap water was always measured as internal standard, and a spray liquid comprising the anti-drift adjuvant Synergen^{®} OS as commercially available standard.

The Spraytec measurement was made at the setting of 1 kHz, since measurements at 2.5 kHz or higher, and also other influencing parameters such as additional suction, were found to be negligible. The measurement in the spray cone was kept constant at a position with distances of exactly 29.3 cm from the nozzle and 0.4 cm from the perpendicular below the nozzle. The measurements were made within 5 seconds, and the mean of 6 repetitions is reported as the proportion by volume of the droplets having diameters < 90 µm ("Vol 90"), < 105 µm ("Vol 105") and
< 150 µm ("Vol 150") (percentage standard error 0.5%-2.5%). As a further measurement parameter, the proportion by volume of the droplets having diameter
< 210 µm ("Vol 210") was determined and expressed in relation to the proportion by volume of droplets having diameter < 105 µm ("Vol 210 / Vol 105"). In addition, the percentage reduction in the proportion by volume of droplets having diameter
< 105 µm in the case of use of spray liquors containing test substances was calculated in comparison to the use of tap water as internal standard ("Red 105").

### C1) Examples for droplet size spectra with flat fan nozzle for spray solutions A1 - A10

Droplet size spectrum for spray solutions A1 - A10 prepared by mixing the test substances with water (composition see Table 10) using the flat fan nozzle XR11002 (at 3bar).

**Table 10**

| Spray solution | Test substance | Vol 90 [Vol.-%] | Vol 105 [Vol.-%] | Vol 150 [Vol.-%] | Vol 210 / Vol 105 | Red 105 [%] |
|---|---|---|---|---|---|---|
| Water | - | 25.21 | 35.11 | 61.11 | 2.33 | 0.00 |
| A1 (reference) | Synergen^{®} OS | 11.10 | 16.12 | 34.25 | 3.61 | 54.10 |
| A2 | F1 | 23.24 | 33.00 | 58.88 | 2.42 | 5.29 |
| A3 | F1 | 22.89 | 32.81 | 59.21 | 2.46 | 5.84 |
| A4 | F2 | 25.19 | 35.33 | 61.79 | 2.33 | -1.40 (increase) |
| A5 | F2 | 26.71 | 37.06 | 63.73 | 2.27 | -6.35 (increase) |
| A6 | F3 | 25.05 | 34.68 | 60.04 | 2.33 | 1.23 |
| A7 | F3 | 27.02 | 37.04 | 63.03 | 2.25 | -5.,48 (increase) |
| A8 | F3 | 28.09 | 38.25 | 64.27 | 2.20 | -8.95 (increase) |
| A9 | F4 | 25.30 | 35.32 | 61.69 | 2.34 | -2.19 (increase) |
| A10 | F5 | 25.80 | 35.52 | 61.26 | 2.31 | -2.76 (increase) |

### C2) Examples for droplet size spectra with air-injection nozzle for spray solutions A1 - A10

Droplet size spectrum for spray solutions A1 - A10 prepared by mixing the test substances with water (composition see Table 11) using the air injection nozzle ID(3)12002 (at 3bar).

**Table 11**

| Spray solution | Test substance | Vol 90 [Vol.-%] | Vol 105 [Vol.-%] | Vol 150 [Vol.-%] | Vol 210 / Vol 105 | Red 105 [%] |
|---|---|---|---|---|---|---|
| Water | - | 1.62 | 2.56 | 5.75 | 3.98 | 0.00 |
| A1 (reference) | Synergen^{®} OS | 0.88 | 1.35 | 2.59 | 3.43 | 47.52 |
| A2 | F1 | 1.04 | 1.66 | 3.58 | 4.01 | 38.86 |
| A3 | F1 | 1.21 | 1.98 | 4.7 | 4.66 | 27.06 |
| A4 | F2 | 1.48 | 2.26 | 4.88 | 4.14 | 16.94 |
| A5 | F2 | 1.75 | 2.82 | 6.88 | 4.87 | -3.53 (increase) |
| A6 | F3 | 2.20 | 3.22 | 6.55 | 3.69 | -25.56 (increase) |
| A7 | F3 | 2.46 | 3.83 | 8.81 | 4.33 | -49.27 (increase) |
| A8 | F3 | 3.05 | 4.99 | 12.33 | 4.62 | -94.48 (increase) |
| A9 | F4 | 2.67 | 3.86 | 7.93 | 3.72 | -28.36 (increase) |
| A10 | F5 | 1.66 | 2.53 | 5.63 | 4.30 | 15.81 |

### C3) Examples for droplet size spectra with flat fan nozzle for spray solutions B1 - B20

Droplet size spectrum for spray solutions B1 - B20 prepared by mixing the test substances with water (composition see Table 12) using the flat fan nozzle XR11002 (at 3bar).

**Table 12**

| Spray solution | Test substance | Vol 90 [Vol.-%] | Vol 105 [Vol.-%] | Vol 150 [Vol.-%] | Vol 210 / Vol 105 | Red 105 [%] |
|---|---|---|---|---|---|---|
| Water | - | 25.21 | 35.11 | 61.11 | 2.33 | 0.00 |
| A1 (not invention) | Synergen^{®} OS | 11.10 | 16.12 | 34.25 | 3.61 | 54.10 |
| B1 | EC1 | 16.72 | 24.65 | 48.1 | 2.88 | 29.49 |
| B2 | EC1 | 10.27 | 14.85 | 32.15 | 3.78 | 57.51 |
| B3 | EC2 | 16.06 | 23.72 | 46.72 | 2.94 | 32.14 |
| B4 | EC2 | 11.03 | 16.21 | 34.65 | 3.61 | 53.64 |
| B5 | EC3 | 18.59 | 27.1 | 51.23 | 2.71 | 22.49 |
| B6 | EC3 | 18.15 | 26.39 | 50.02 | 2.74 | 24.51 |
| B7 | EC4 | 19.59 | 28.5 | 53.31 | 2.64 | 18.48 |
| B8 | EC4 | 20.21 | 29.16 | 53.82 | 2.59 | 16.6 |
| B9 | EC5 | 12.31 | 18.21 | 38.26 | 3.42 | 47.9 |
| B10 | EC5 | 11.89 | 17.51 | 36.9 | 3.47 | 49.92 |
| B11 | EC6 | 13.06 | 19.38 | 40.18 | 3.3 | 44.56 |
| B12 | EC6 | 12.63 | 18.62 | 38.74 | 3.37 | 46.75 |
| B13 | EC7 | 13.05 | 19.46 | 40.47 | 3.31 | 44.35 |
| B14 | EC7 | 11.36 | 16.6 | 35.21 | 3.56 | 52.51 |
| B15 | EC8 | 14.94 | 22.23 | 44.77 | 3.07 | 36.41 |
| B16 | EC8 | 11.66 | 17.1 | 36.04 | 3.5 | 51.09 |
| B17 | EC9 | 17.26 | 25.38 | 49.09 | 2.83 | 27.16 |
| B18 | EC9 | 14.45 | 21.48 | 43.49 | 3.12 | 38.35 |
| B19 | EC10 | 15.96 | 23.69 | 46.88 | 2.95 | 32.00 |
| B20 | EC10 | 18.20 | 26.57 | 50.59 | 2.75 | 23.75 |

### C4) Examples for droplet size spectra with air-injection nozzle for spray solutions B1 - B20

Droplet size spectrum for spray solutions B1 - B20 prepared by mixing the test substances with water (composition see Table 13) using the air injection nozzle ID(3)12002 (at 3bar).

**Table 13**

| Spray solution | Test substance | Vol 90 [Vol.-%] | Vol 105 [Vol.-%] | Vol 150 [Vol.-%] | Vol 210 / Vol 105 | Red 105 [%] |
|---|---|---|---|---|---|---|
| Water | - | 1.62 | 2.56 | 5.75 | 3.98 | 0.00 |
| A1 (not invention) | Synergen^{®} OS | 0.88 | 1.35 | 2.59 | 3.43 | 47.52 |
| B1 | EC1 | 0.7 | 1.07 | 1.97 | 3.22 | 61.06 |
| B2 | EC1 | 0.82 | 1.25 | 2.24 | 2.76 | 54.4 |
| B3 | EC2 | 0.75 | 1.13 | 2.07 | 3.26 | 58.83 |
| B4 | EC2 | 0.79 | 1.19 | 2.11 | 2.85 | 56.46 |
| B5 | EC3 | 0.77 | 1.19 | 2.34 | 3.26 | 56.52 |
| B6 | EC3 | 0.62 | 0.97 | 1.85 | 3.01 | 64.49 |
| B7 | EC4 | 0.79 | 1.23 | 2.38 | 3.12 | 55.22 |
| B8 | EC4 | 0.63 | 1.01 | 1.96 | 3.11 | 63.24 |
| B9 | EC5 | 0.91 | 1.41 | 2.63 | 2.77 | 48.66 |
| B10 | EC5 | 0.79 | 1.22 | 2.26 | 2.93 | 55.62 |
| B11 | EC6 | 0.93 | 1.44 | 2.69 | 2.74 | 47.38 |
| B12 | EC6 | 0.82 | 1.25 | 2.27 | 2.89 | 54.52 |
| B13 | EC7 | 0.86 | 1.34 | 2.5 | 2.79 | 51.31 |
| B14 | EC7 | 0.9 | 1.38 | 2.55 | 2.76 | 49.76 |
| B15 | EC8 | 0.9 | 1.39 | 2.58 | 2.77 | 49.22 |
| B16 | EC8 | 0.91 | 1.38 | 2.54 | 2.86 | 49.5 |
| B17 | EC9 | 0.79 | 1.22 | 2.21 | 2.76 | 55.20 |
| B18 | EC9 | 0.67 | 1.03 | 1.84 | 2.66 | 61.97 |
| B19 | EC10 | 0.93 | 1.43 | 2.70 | 2.80 | 47.25 |
| B20 | EC10 | 0.68 | 1.07 | 1.99 | 2.81 | 60.68 |

### C5) Examples for droplet size spectra with flat fan nozzle for spray solutions C1 - C9

Droplet size spectrum for spray solutions C1 - C9 prepared by mixing the test substances with different 2,4-D formulation (composition see Table 14) using the flat fan nozzle XR11002 (at 3bar).

**Table 14**

| Spray solution | Test substance / pesticide formulation | Vol 90 [Vol.-%] | Vol 105 [Vol.-%] | Vol 150 [Vol.-%] | Vol 210 / Vol 105 | Red 105 [%] |
|---|---|---|---|---|---|---|
| Water | - | 24.52 | 34.31 | 60.04 | 2.35 | 0.00 |
| A1 (not invention) | Synergen^{®} OS / - | 10.20 | 14.90 | 32.43 | 3.78 | 56.57 |
| C1 (not invention) | / Ester'H | 12.46 | 18.58 | 38.69 | 3.34 | 45.85 |
| C2 | EC 2 / Ester'H | 10.61 | 15.42 | 32.72 | 3.62 | 55.06 |
| C3 | EC 4 / Ester'H | 13.12 | 19.41 | 39.87 | 3.26 | 43.41 |
| C4 | EC 6 / Ester'H | 11.37 | 16.73 | 35.43 | 3.52 | 51.23 |
| C5 (not invention) | / Barrage HF | 14.75 | 21.64 | 43.01 | 3.05 | 36.92 |
| C6 | EC 2 / Barrage HF | 17.48 | 25.47 | 48.88 | 2.81 | 25.75 |
| C7 | EC 4 / Barrage HF | 16.71 | 24.32 | 46.80 | 2.85 | 29.11 |
| C8 | EC 6 / Barrage HF | 12.05 | 17.72 | 37.15 | 3.44 | 48.35 |
| C9 | P1 (in-can 2,4-D isoctylester formulation) | 11.25 | 16.16 | 33.79 | 3.54 | 53.62 |

### C6) Examples for droplet size spectra with flat fan nozzle for spray solutions D1 - D4

Droplet size spectrum for spray solutions D1 - D4 prepared by mixing the test substances with the fungicide formulation Input XPro (composition see Table 15) using the flat fan nozzle XR11002 (at 3bar).

**Table 15**

| Spray solution | Test substance / pesticide formulation | Vol 90 [Vol.-%] | Vol 105 [Vol.-%] | Vol 150 [Vol.-%] | Vol 210 / Vol 105 | Red 105 [%] |
|---|---|---|---|---|---|---|
| Water | - | 24.52 | 34.31 | 60.04 | 2.35 | 0.00 |
| A1 (not invention) | Synergen^{®} OS / - | 10.20 | 14.90 | 32.43 | 3.78 | 56.57 |
| D1 (not invention) | / Input XPro | 28.40 | 39.30 | 66.04 | 2.17 | -14.55 (increase) |
| D2 | EC 2 / Input XPro | 13.81 | 19.96 | 40.35 | 3.22 | 41.83 |
| D3 | EC 4 / Input XPro | 12.54 | 18.33 | 38.08 | 3.38 | 46.56 |
| D4 | EC 6 / Input XPro | 12.10 | 18.24 | 39.31 | 3.52 | 46.84 |

### C7) Examples for droplet size spectra with flat fan nozzle for spray solutions E1, E3 and E4

Droplet size spectrum for spray solutions E1, E3 - E4 prepared by mixing the test substances with the plant growth regulator formulation MaxCel (composition see Table 16) using the flat fan nozzle XR11002 (at 3bar).

**Table 16**

| Spray solution | Test substance / pesticide formulation | Vol 90 [Vol.-%] | Vol 105 [Vol.-%] | Vol 150 [Vol.-%] | Vol 210 / Vol 105 | Red 105 [%] |
|---|---|---|---|---|---|---|
| Water | - | 24.52 | 34.31 | 60.04 | 2.35 | 0.00 |
| A1 (not invention) | Synergen^{®} OS / - | 10.20 | 14.90 | 32.43 | 3.78 | 56.57 |
| E1 (not invention) | / MaxCel | 21.43 | 30.55 | 55.30 | 2.51 | 10.96 |
| E3 | EC 6 / MaxCel | 11.46 | 16.88 | 35.77 | 3.52 | 50.80 |
| E4 | EC 8 / MaxCel | 11.20 | 16.52 | 35.23 | 3.57 | 51.84 |

### C8) Examples for droplet size spectra with air injection nozzle for spray solutions E1 - E4

Droplet size spectrum for spray solutions E1 - E4 prepared by mixing the test substances with the plant growth regulator formulation MaxCel (composition see Table 17) using the air injection nozzle ID(3)12002 (at 3bar).

**Table 17**

| Spray solution | Test substance / pesticide formulation | Vol 90 [Vol.-%] | Vol 105 [Vol.-%] | Vol 150 [Vol.-%] | Vol 210 / Vol 105 | Red 105 [%] |
|---|---|---|---|---|---|---|
| Water | - | 1.83 | 2.92 | 6.64 | 4.03 | 0.00 |
| A1 (not invention) | Synergen^{®} OS / - | 0.98 | 1.50 | 2.91 | 3.48 | 48.78 |
| E1 (not invention) | - / MaxCel | 1.46 | 2.20 | 4.74 | 4.19 | 24.78 |
| E2 (not invention) | Synergen® OS / MaxCel | 0.98 | 1.49 | 2.83 | 3.27 | 49.05 |
| E3 | EC 6 / MaxCel | 0.81 | 1.23 | 2.39 | 3.65 | 57.91 |
| E4 | EC 8 / MaxCel | 0.82 | 1.24 | 2.29 | 3.24 | 57.52 |

### C9) Examples for droplet size spectra with air injection nozzle for spray solutions G1 - G5

Droplet size spectrum for spray solutions G1 - G5 prepared by mixing the test substances with the insecticide formulation Biskaya OD (composition see Table 18) using the air injection nozzle ID(3)12002 (at 3bar).

**Table 18**

| Spray solution | Test substance / pesticide formulation | Vol 90 [Vol.-%] | Vol 105 [Vol.-%] | Vol 150 [Vol.-%] | Vol 210 / Vol 105 | Red 105 [%] |
|---|---|---|---|---|---|---|
| Water | - | 1.83 | 2.92 | 6.64 | 4.03 | 0.00 |
| A1 (not invention) | Synergen^{®} OS / - | 0.98 | 1.50 | 2.91 | 3.48 | 48.78 |
| G1 (not invention) | - / Biskaya OD | 0.71 | 1.13 | 2.24 | 3.44 | 61.50 |
| G2 (not invention) | Synergen® OS / Biskaya OD | 0.90 | 1.37 | 2.67 | 3.47 | 53.11 |
| G3 | EC 2 / Biskaya OD | 0.87 | 1.34 | 2.48 | 2.84 | 54.15 |
| G4 | EC 4 / Biskaya OD | 0.67 | 1.05 | 2.06 | 3.45 | 64.00 |
| G5 | EC 6 / Biskaya OD | 0.81 | 1.25 | 2.37 | 3.16 | 57.22 |

### D) Dynamic Surface Tension

The dynamic surface tension has been determined by the bubble pressure method (Tensiometer BP2100, Krüss). For aqueous compositions of agrochemicals which are applied as sprays, the value of the dynamic surface tensions in [mN/m] at the relevant time interval (the so called surface age using the bubble pressure method) of 200 ms (milliseconds), correlates with the adhesion on difficult to wet plants like barley (cereals). Compared to pure water with a surface tension of 72.8 a value of 50 mN/m (at 20 - 21 °C) translates in an improvement in adhesion from "zero adhesion" (0 %) to approximately 50 % (Baur P., Pontzen R.; 2007; Basic features of plant surface wettability and deposit formation and the impact of adjuvant; in R. E. Gaskin ed. Proceedings of the 8th International Symposium on Adjuvant for Agrochemicals; Publisher: International Society for Agrochemical Adjuvant (ISAA), Columbus, Ohio, USA). Additionally it is know that surface active substances, which lower the dynamic surface tension, usually have a negative influence on the spray drift, since they tend to increase the fraction of fine droplets in the spray. (Hilz et al., Spray drift review: The extent to which a formulation can contribute to spray drift reduction, Crop Protection 44 (2013) 75 - 83). Surprisingly some of the compositions illustrated in the present invention show excellent drift reduction (reduction of proportion of fine droplets) despite the fact that they exhibit low dynamic surface tensions (see Table 19).

**Table 19**

| Dynamic Surface Tension at 200 ms [mN/m] | | |
|---|---|---|
| Test substance | 0,1 [w%] | 0,5 [w%] |
| Synergen^{®} OS | 73.2 | 70.8 |
| EC1 | 71.4 | 64.0 |
| EC2 | 73.2 | 52.2 |
| EC3 | 72.2 | 66.3 |
| EC4 | 70.8 | 56.0 |
| EC5 | 71.2 | 65.5 |
| EC6 | 70.6 | 60.2 |
| EC7 | 71.3 | 62.8 |
| EC8 | 72.1 | 54.0 |

## Claims

1. Use of a composition comprising
a) one or more alkyl benzene sulfonate surfactants according to formula (I) 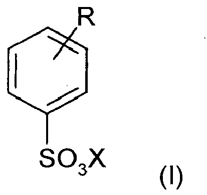 wherein
R is a linear or branched C₈-C₁₈ alkyl group, and preferably a linear or branched C₁₂ alkyl group, and
X is a suitable counter-cation,
b) one or more aromatic solvents, and
c) optionally one or more non-ionic surfactants,
for reducing the spray drift when applying a plant treatment composition.

2. Use according to claim 1, wherein the counter-ion is an alkyl ammonium cation,an alkali metal cation or an earth alkaline metal cation.

3. Use according to claim 2, wherein the counter-ion is selected from the group consisting of isopropyl ammonium, dimethyl ammonium, triethyl ammonium, tetramethyl ammonium, monoethanol ammonium, diethanol ammonium, triethanol ammonium, dimethylethanol ammonium, diethylenglycol ammonium, triisopropanol ammonium, tetraethyl ammonium, choline, calcium, magnesium, potassium, sodium or calcium.

4. Use according to claim 1, wherein the one or more aromatic solvents b) are un-substituted benzene or benzene or naphthalene which are substituted with one or two C₁-C₄ alkyl groups and/or with one or two C₁-C₄ alkoxy groups and/or with one or two hydroxyl groups and/or with one or two chlorine atoms.

5. Use according to claim 4, wherein the aromatic solvent b) is selected from the group consisting of xylene, toluene, alkylnaphthalenes, naphthalene depleted alkarenes, chlorinated aromatic hydrocarbons, cymene or carvacrol.

6. Use according to claim 1, wherein the composition contains ingredients a), b) and c).

7. Use according to claim 1, wherein the one or more non-ionic surfactants c) are selected from the group consisting of polycondensates of alkylene oxide with fatty alcohols, fatty acids or triglycerides of fatty acids, fatty amines, substituted phenols, fatty acid esters of polyols, polymeric surfactants based on copolymers of ethylene and propylene, alkylpolyglycosides, glucamides, alkoxylated sorbitanester derivates or mixtures of two or more thereof.

8. Use according to claim 7, wherein the one or more non-ionic surfactants c) are selected from the group consisting of alkoxylated fatty acids, alkoxylated triglycerides of fatty acids, alkoxylated alkylphenols and/or alkoxylated arylphenols, preferably selected from the group consisting of ethoxylated fatty acids, ethoxylated triglycerides of fatty acids, ethoxylated alkylphenols and/or ethoxylated arylphenols, .

9. Use according to claim 1, wherein the one or more non-ionic surfactants c) are selected from the group consisting of polycondensates of ethylene oxide with castor oil.

10. Use according to claim 1, wherein the composition for reducing the spray drift contains
a) 0.01 % to 99 % by weight, preferably 1 % to 80 % by weight and more preferably 2 % to 50 % by weight of one or more alkyl benzene sulfonate surfactants according to formula (I),
b) 0.01 % to 99 % by weight, preferably 1 % to 95 % by weight and more preferably 5 % to 90 % by weight of one or more aromatic solvents, and
c) 0 % to 99 % by weight, preferably 1 % to 80 % by weight and more preferably 2 % to 50 % by weight of one or more non-ionic surfactants.

11. Use according to claim 1, wherein the composition for reducing the spray drift is used in a crop treatment composition as a tankmix additive, wherein the composition for reducing the spray drift is not added until directly prior to deployment of a spray liquid produced from a concentrated formulation to form said crop treatment composition.

12. Use according to claim 1, wherein the composition for reducing the spray drift is used in a crop treatment composition as an in-can additive, wherein the composition for reducing the spray drift is already incorporated into a concentrated formulation together with the ingredients of the crop treatment composition and is deployed as spray liquid diluted with water.

13. Use according to one of the claims 11 or 12, wherein the spray liquid contains one or more agrochemical substances, preferably one or more pesticides.

14. A method for reducing drift in the application of plant treatment compositions, wherein a spray liquid is sprayed onto the plants to be treated or onto the site thereof, the spray liquid contains one or more alkyl benzene sulfonate surfactants of formula (I) according to claim 1 and one or more aromatic solvents.

15. The method according to claim 14, wherein the combined amount of the one or more alkyl benzene sulfonate surfactants of formula (I) and of the aromatic solvents in the spray liquid is from 0.001 % to 5 % by weight, more preferably from 0.005 % to 3 % by weight, especially preferably from 0.01 % to 1 % by weight and exceptionally preferably from 0.03 % to 0.5 % by weight, based in each case on the total weight of the spray liquid.

16. A plant treatment composition containing one or more of an alkyl benzene sulfonate surfactant of formula (I) according to claim 1 and one or more of an aromatic solvent.

17. The composition according to claim 16, wherein the combined amount of the one or more alkyl benzene sulfonate surfactants of formula (I) and of the one or more aromatic solvents is from 0.001 % to 5 % by weight, more preferably from 0.005 % to 3 % by weight, especially preferably from 0.01 % to 1 % by weight and exceptionally preferably from 0.03 % to 0.5 % by weight, based in each case on the total weight of the composition.

18. The composition according to any of claims 16 or 17, wherein the composition further contains one or more water-soluble agrochemical substances and/or water-insoluble agrochemical substances.
